# EUROPEAN PATENT APPLICATION

(11) **EP 3 162 669 A1**
(43) Date of publication of application: **03.05.2017**
(21) Application number: 15811978.4
(22) Date of filing: 19.06.2015
(51) Int. Cl.: B62D 25/04, A01C 11/02, B62D 25/06, B62D 49/00

(54) **WORK VEHICLE**

(30) Priority: 26.06.2014 JP 2014131853
(71) Applicant: Yanmar Co., Ltd., Osaka-shi, Osaka 530-8311 (JP)
(72) Inventor: MIYAZAKI Ryuuichi, Osaka-shi Osaka 530-8311 (JP)
(74) Representative: Hoffmann Eitle
(86) International application number: PCT/JP2015/067784
(87) International publication number: WO 2015/199000

(57) **Abstract**

A technical object of the invention is to provide a work vehicle (1) which can meet cost reduction request while achieving improvement of rigidity of a cabin frame (300). The work vehicle (1) of the invention is provided with a cabin (7) which covers a control seat (8) on a travel machine body (2). The cabin (7) has a cabin frame (300) which constructs a framework. At least one frame member (304, 305) of the cabin frame (300) is formed into a C-shaped cross section. A reinforcing plate (304a, 305a) extending along a longitudinal direction of the frame member (304, 305) is fixed by welding to an opening portion of the frame member (304, 305). At least longitudinally intermediate portion of the frame member (304, 305) is formed into a hollow shape.

## Description

### Technical Field

The present invention relates to a work vehicle such as a tractor for an agricultural work or a wheel loader for a civil engineering work.

### Background Art

Conventionally, the work vehicle such as the tractor for the agricultural work is provided with a cabin which covers a control seat existing on a travel machine body (refer, for example, to Patent Documents 1 and 2). The cabin in the Patent Document 1 has a cabin frame which constructs a framework, and a roof body which is arranged in an upper end side of the cabin frame. The cabin frame is formed into a so-called frame construction in which column supports (pillars) and beam members (beams) are combined, and a rigidity of the cabin frame is secured by the column supports and the beam members.

### Citation List

### Patent Literature

Patent Document 1: Japanese Unexamined Patent Application Publication No. 2002-67657
Patent Document 2: Japanese Unexamined Patent Application Publication No. 2004-345367

### Summary of Invention

### Technical Problem

In this kind of work vehicle, since the column support and the beam member are secured their strengths by being constructed by a square pipe material, a cost increase is brought about as well as an improvement of rigidity in the cabin frame. As a result, there has been a problem that it is not compatible with a cost reduction request which has risen up in recent years.

### Solution to Problem

A technical object of the present invention is to provide a work vehicle to which an improvement is applied while making a study of the actual condition as mentioned above.

The invention according to a first aspect is a work vehicle including a cabin which covers a control seat on a travel machine body, the cabin having a cabin frame constructing a framework, wherein at least one frame member of the cabin frame is formed into a C-shaped cross section, and at least a longitudinal intermediate portion of the frame member is formed into a hollow shape by welding and fixing a reinforcing plate extending along a longitudinal direction of the frame member to an opening portion of the frame member.

The invention according to a second aspect is the work vehicle described in the first aspect, wherein a base bracket for attaching a vibration absorption member is attached to abutting portions of two frame members which abut on each other in a lower portion side in the cabin frame, and wherein the base bracket is provided with a reinforcing plate piece which laps over the abutting portions, and an opening hole facing to the abutting portions is formed in the reinforcing plate piece.

The invention according to a third aspect is the work vehicle described in the second aspect, wherein the base bracket is attached to the right and left abutting portions in a lower portion side at the rear of the cabin frame so as to protrude laterally outward, and the base bracket is coupled to a support table on a rear axle case which protrudes from a transmission case of the travel machine body laterally outward via the vibration absorption member.

The invention according to a fourth aspect is the work vehicle described in any one of the first to third aspects, wherein the cabin frame is provided with a pair of right and left front column supports, a pair of right and left rear column supports, a front beam member which couples between upper end portions of the front column supports, a rear beam member which couples between upper end portions of the rear column supports, and a side beam member which couples between the upper end portions of the front column supports and the rear column supports lined up back and forth, and wherein each of the column supports and each of the beam members are positioned in a side line portion of the cabin.

### Advantageous Effect of Invention

According to the present invention, in the work vehicle including the cabin which covers the control seat on the travel machine body, the cabin having the cabin frame constructing the framework, at least one frame member of the cabin frame is formed into the C-shaped cross section, and at least the longitudinal intermediate portion of the frame member is formed into a hollow shape by welding and fixing the reinforcing plate extending along the longitudinal direction of the frame member to the opening portion of the frame member. As a result, it is possible to improve a rigidity of the frame member and further a rigidity of the cabin frame without using the conventional expensive square pipe material, and a cost reduction can be achieved.

According to the invention of the second aspect, in the work vehicle in which the base bracket for attaching the vibration absorption member is attached to the abutting portions of two frame members which abut on each other in the lower portion side in the cabin frame, the base bracket is provided with the reinforcing plate piece which laps over the abutting portions, and the opening hole facing to the abutting portions is formed in the reinforcing plate piece. As a result, the base bracket with the reinforcing plate piece is previously attached to one frame member so as to form a unit, and the other frame member can be additionally welded and fixed to the one frame member by retrofitting. Further, it is possible to sufficiently secure a weld length of a portion over which the reinforcing plate piece covers in the abutting portion when the other frame member is welded and fixed to the one frame member, on the basis of existence of the opening hole. Therefore, it is possible to achieve an improvement of a bonding strength of the both frame members, and further achieve an improvement of a rigidity of the cabin frame, as well as a bonding workability of the both frame members can be improved.

According to the invention of the third aspect, the base bracket is attached to the right and left abutting portions in the lower portion side at the rear of the cabin frame so as to protrude laterally outward, and the base bracket is coupled to the support table on the rear axle case which protrudes from the transmission case of the travel machine body laterally outward via the vibration absorption member. As a result, it is possible to support the lower portion side at the rear of the cabin frame from the right and left outer side than the lower portion side, and it is possible to stably couple the lower portion side at the rear of the cabin frame in relation to the travel machine body in a vibration absorbing manner.

According to the invention of the fourth aspect, the cabin frame is provided with the pair of right and left front column supports, the pair of right and left rear column supports, the front beam member which couples between the upper end portions of the front column supports, the rear beam member which couples between the upper end portions of the rear column supports, and the side beam members which couple between the upper end portions of the front column supports and the rear column supports lined up back and forth, and each of the column supports and each of the beam members are positioned in the side line portion of the cabin. As a result, a window can be secured wide in the front, back, right, and left side surfaces of the cabin frame. Accordingly, it is possible to secure field of view of an operator in a back and forth direction and a right and left direction and secure the rigidity of the cabin frame at the same time.

### Brief Description of Drawings

Fig. 1 is a left side elevational view of a tractor;
Fig. 2 is a plan view of the tractor;
Fig. 3 is a right side elevational view of the tractor;
Fig. 4 is a perspective view of the tractor as seen from a rear side in a rightward diagonal direction;
Fig. 5 is an explanatory view of a left side surface of a travel machine body;
Fig. 6 is an explanatory view of a left side surface showing a detailed structure of the travel machine body;
Fig. 7 is a perspective view of the travel machine body as seen from a rear side in a leftward diagonal direction;
Fig. 8 is an explanatory view of a right side surface of the travel machine body;
Fig. 9 is an explanatory view of a right side surface showing the detailed structure of the travel machine body;
Fig. 10 is a perspective view of the travel machine body as seen from a rear side in a rightward diagonal direction;
Fig. 11 is a left side elevational view of a cabin;
Fig. 12 is a plan view of the cabin;
Fig. 13 is a front elevational view of the cabin;
Fig. 14 is a right side elevational view of the cabin;
Fig. 15 is a back elevational view of the cabin;
Fig. 16 is a bottom elevational view of the cabin;
Fig. 17 is a left side elevational view of a cabin frame;
Fig. 18 is a plan view of the cabin frame;
Fig. 19 is a front elevational view of the cabin frame;
Fig. 20 is a right side elevational view of the cabin frame;
Fig. 21 is a back elevational view of the cabin frame;
Fig. 22 is a perspective view of the cabin frame as seen from a front side in a leftward diagonal direction;
Fig. 23 is a perspective view of the cabin frame as seen from a rear side in a leftward diagonal direction;
Fig. 24 is a perspective view of a vibration absorption structure of the cabin as seen from a front side in a leftward diagonal direction;
Fig. 25 is a perspective view of the vibration absorption structure of the cabin as seen from a rear side in a rightward diagonal direction;
Fig. 26 is an enlarged perspective view of a right front column support and a front beam member;
Fig. 27 is an enlarged perspective view of a right rear column support and a rear beam member;
Fig. 28 is a plan view of a roof body;
Fig. 29 is a perspective view showing an inner roof;
Fig. 30A is an enlarged cross sectional view of the front beam member;
Fig. 30B is an enlarged cross sectional view of the rear beam member;
Fig. 30C is an enlarged cross sectional view of the right beam member;
Fig. 30D is an enlarged cross sectional view of the left beam member;
Fig. 31A is an explanatory view showing a coupling structure of the front beam member, the left beam member, and the left front column support;
Fig. 31B is an explanatory view showing a coupling structure of the front beam member, the right beam member, and the right front column support;
Fig. 32A is an explanatory view showing a coupling structure of the rear beam member, the left beam member, and the left rear column support;
Fig. 32B is an explanatory view showing a coupling structure of the rear beam member, the right beam member, and the right rear column support;
Fig. 33A is a side elevational view of a base bracket; and
Fig. 33B is a back elevational perspective view of the base bracket.

### Description of Embodiments

Hereinafter, a description will be given of an embodiment obtained by embodying the present invention with reference to the accompanying drawings while exemplifying a tractor which is a work vehicle.

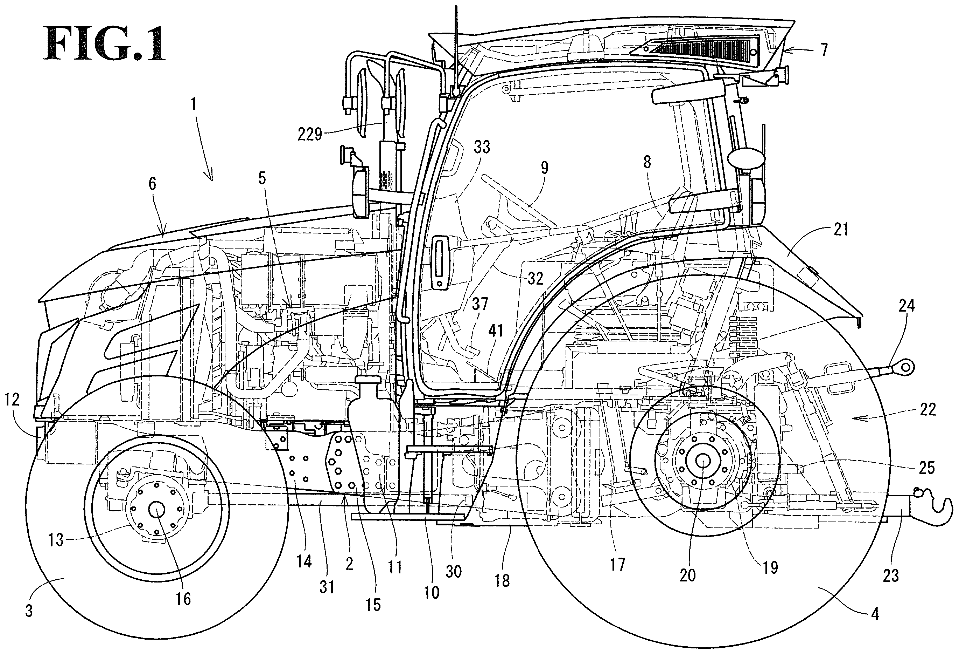

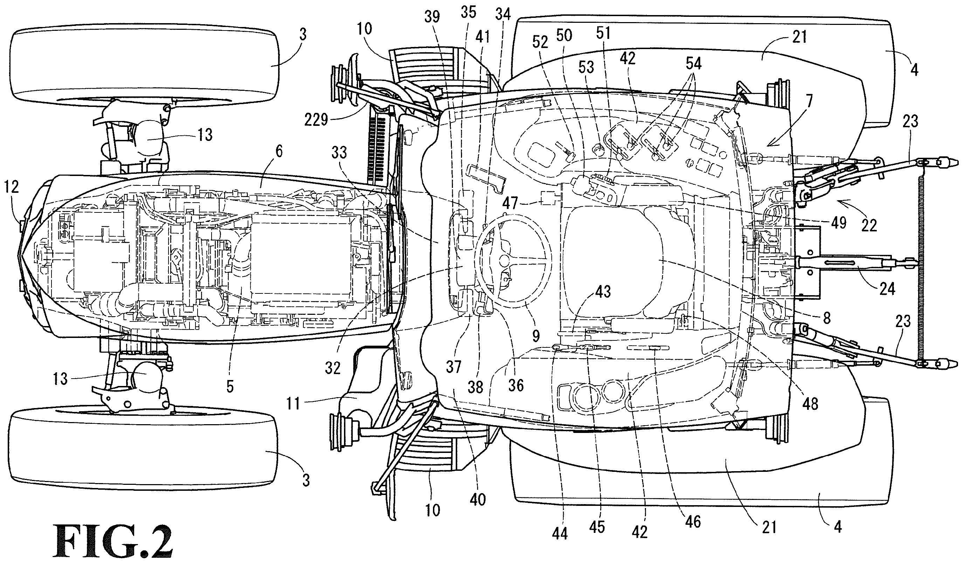

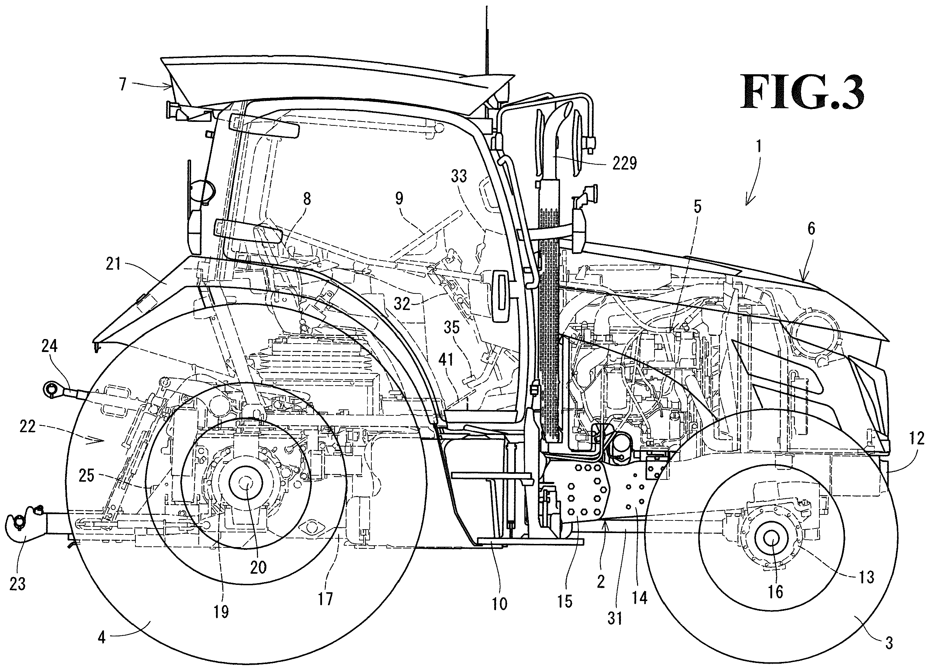

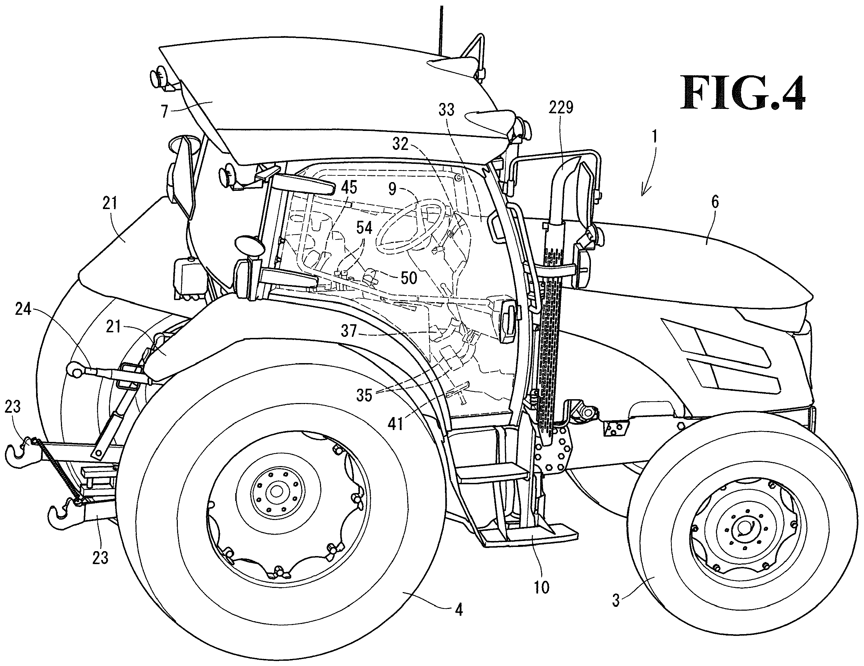

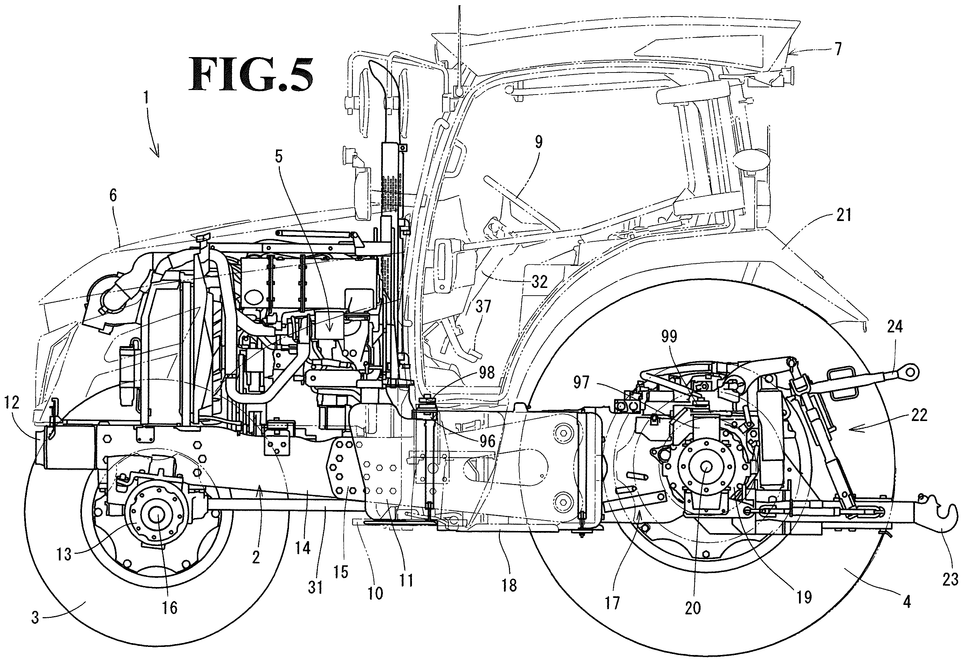

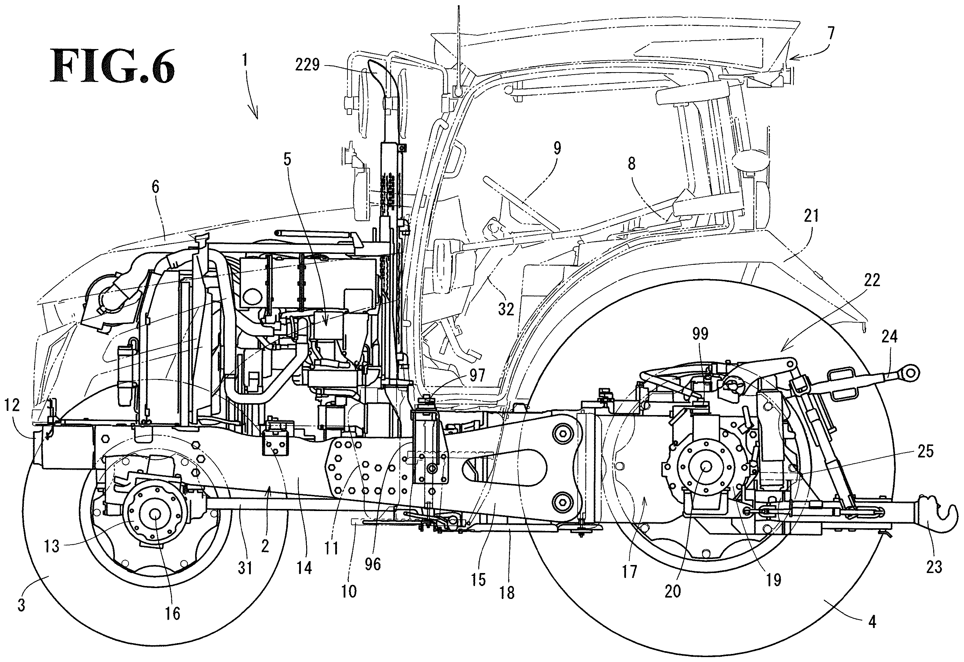

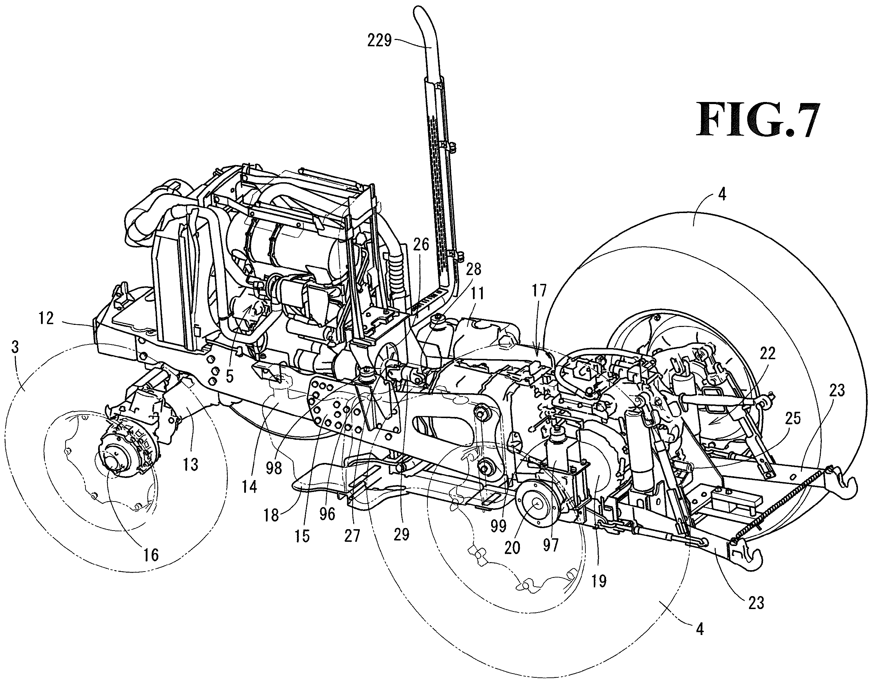

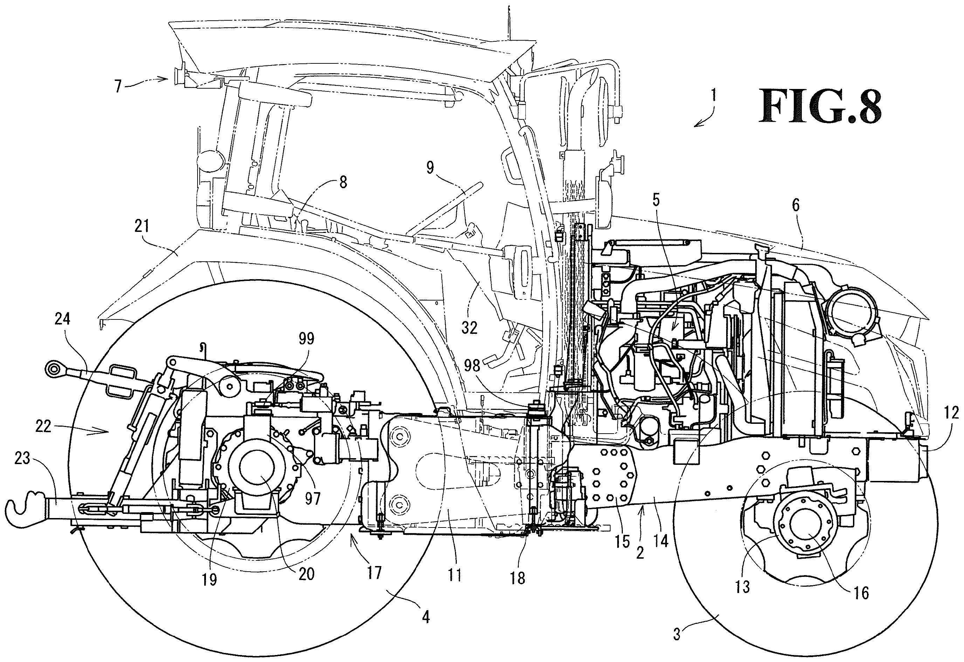

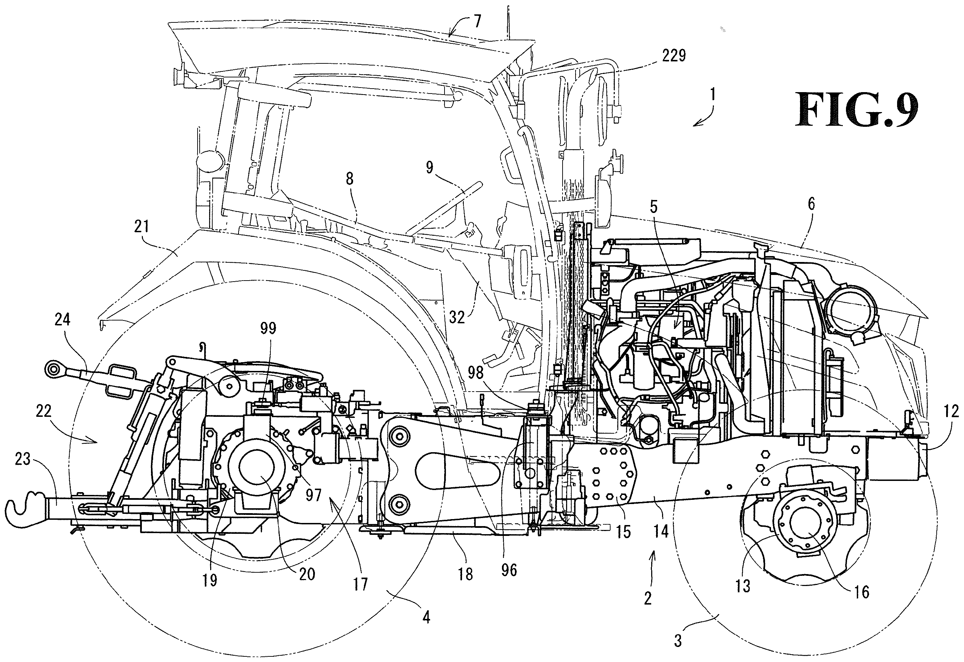

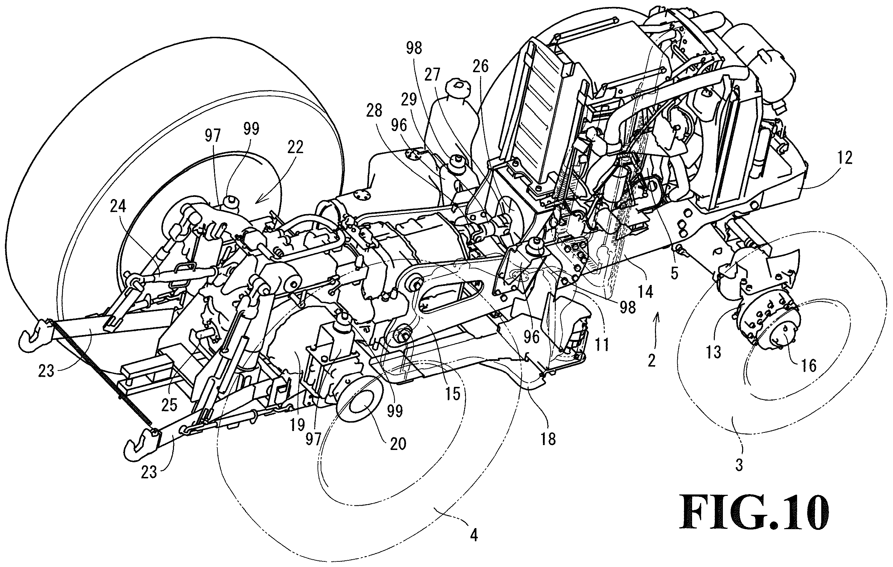

First of all, a description will be given of an outline of a tractor 1 with reference to Figs. 1 to 10. A travel machine body 2 of the tractor 1 in the embodiment is supported by a pair of right and left front wheels 3 which serve as a traveling portion and a pair of right and left rear wheels 4 which serve as the traveling portion in the same manner. The tractor 1 is structured to travel forward and backward by driving the rear wheels 4 and the front wheels 3 by means of a common rail type diesel engine 5 (hereinafter, simply referred to as engine) which is mounted in a front portion of the travel machine body 2 and serves as a power source. The engine 5 is covered with a hood 6. A cabin 7 is installed in an upper surface of the travel machine body 2, and in an inner portion of the cabin 7, there are arranged a control seat 8, and a control steering wheel (a round handle) 9 which is structured to move a steering direction of the front wheels 3 right and left by steering. Steps 10 by which an operator gets on and off is provided in right and left lower portions of the cabin 7. A fuel tank 11 supplying a fuel to the engine 5 is provided in a lower side than a bottom portion of the cabin 7.

The travel machine body 2 is constructed by an engine frame 14 which has a front bumper 12 and a front axle case 13, and right and left machine body frames 15 which are detachably fixed to a rear portion of the engine frame 14. A front axle 16 is rotatably protruded from both right and left end sides of the front axle case 13 toward an outer side. The front wheels 3 are attached to both right and left end sides of the front axle case 13 via the front axle 16. A transmission case 17 for appropriately shifting a rotary power from the engine 5 and transmitting the rotary power to front and rear four wheels 3, 3, 4, and 4 is coupled to a rear portion of the machine body frame 15. A tank frame 18 is fastened by bolts to the lower surface side of the right and left machine body frames 15 and the transmission case 17, the tank frame 18 protruding laterally outward and formed into a rectangular frame plate shape in a bottom surface view. The fuel tank 11 in the embodiment is laterally separated into two sections. The right and left fuel tanks 11 are mounted in a sorting manner in upper surface sides of right and left protruding portions of a tank frame 18. Right and left rear axle cases 19 are installed to right and left outer surfaces of the transmission case 17 so as to protrude outward. Right and left rear axles 20 are inserted rotatably to the right and left rear axle cases 19. The rear wheels 4 are attached to the transmission case 17 via the rear axles 20. The above of the right and left rear wheels 4 is covered with right and left rear fenders 21.

A hydraulic elevating mechanism 22 is detachably mounted to an upper surface of a rear portion of the transmission case 17, the hydraulic elevating mechanism 22 moving up and down a working machine such as a rotary tiller. The working machine such as the rotary tiller is coupled to the rear portion of the transmission case 17 via a three-point link mechanism which is constructed by a pair of right and left lower links 23 and a top link 24. A PTO shaft 25 for transmitting a PTO driving force to the working machine such as the rotary tiller is provided in a rear side surface of the transmission case 17 so as to protrude rearward.

A flywheel 26 is attached to an engine output shaft (not shown) provided so as to protrude rearward from a rear side surface of the engine 5 in such a manner as to be directly connected. A main power shaft 27 and a main transmission input shaft 28 are coupled via a power transmission shaft 29 having universal shaft couplings in both ends, the main power shaft 27 protruding rearward from the flywheel 26, and the main transmission input shaft 28 protruding forward from a front surface side of the transmission case 17 (refer to Figs. 1, 7, and 10). Within the transmission case 17, there are arranged a hydraulic continuously variable transmission, a forward and backward movement switching mechanism, a traveling sub transmission gear mechanism, and a differential gear mechanism for the rear wheels. The rotary power of the engine 5 is transmitted to the main transmission input shaft 28 of the transmission case 17 via the main power shaft 27 and the power transmission shaft 29, and is appropriately shifted by the hydraulic continuously variable transmission and the traveling sub transmission gear mechanism. Further, the transmission power is transmitted to the right and left rear wheels 4 via the differential gear mechanism for the rear wheels.

A front wheel transmission shaft (not shown) is coupled via a front wheel drive shaft 31 to a front wheel output shaft 30 which protrudes forward from a lower portion of a front surface in the transmission case 17, the front wheel transmission shaft protruding rearward from the front axle case 13 which has a built-in differential gear mechanism (not shown) for the front wheels. A transmission power generated by a hydraulic continuously variable transmission and a traveling sub transmission gear mechanism within the transmission case 17 is transmitted to the right and left front wheels 3 from the front wheel output shaft 30, the front wheel drive shaft 31, and the front wheel transmission shaft via the differential gear mechanism for the front wheels within the front axle case 13.

Next, a description will be given of a structure of an internal portion of the cabin 7 with reference to Figs. 1 to 4. A steering column 32 is arranged in a front side of the control seat 8 within the cabin 7. The steering column 32 is provided in a rising manner in a state in which the steering column 32 is buried in a back surface side of a dash board 33 which is arranged in a front surface side in the internal portion of the cabin 7. An approximately round type control steering wheel 9 in a plan view is attached to an upper end side of a handle shaft which protrudes upward from an upper surface of the steering column 32.

A one-touch elevating lever 34 and a pair of right and left brake pedals 35 are arranged in a right side of the steering column 32, the one-touch elevating lever 34 being provided for forcibly moving the working machine such as the rotary tiller to the most ascending position and the most descending position, and the brake pedals 35 being provided for braking the travel machine body 2. A forward and backward movement switching lever 36 (a reverser lever) and a clutch pedal 37 are arranged in a left side of the steering column 32, the forward and backward movement switching lever 36 being provided for switching a travelling direction of the travel machine body 2 to a forward movement and a backward movement, and the clutch pedal 37 being provided for shutting off a clutch for connecting and disconnecting the power (not shown).

A wrong operation preventing body 38 (a reverser guard) is arranged below the forward and backward movement switching lever 36 in a left side of the steering column 32, the wrong operation preventing body 38 extending along the forward and backward movement switching lever 36. Since the wrong operation preventing body 38 corresponding to a contact preventing device is arranged below the forward and backward movement switching lever 36, the operator is prevented from carelessly coming into contact with the forward and backward movement switching lever 36 when the operator gets on and off the tractor 1. An operation display panel 39 having a built-in liquid crystal panel is provided in an upper portion side of a back surface in the dash board 33.

An accelerator pedal 41 is arranged in a right side of the steering column 32 in a floor panel 40 in the front side of the control seat 8 within the cabin 7, the accelerator pedal 41 controlling a rotating speed or a vehicle speed of the engine 5. An upper surface of the floor panel 40 is formed into a flat surface approximately as a whole. Side columns 42 are arranged in both right and left sides while having the control seat 8 therebetween. A parking brake lever 43, a super low speed lever 44 (a creep lever), a sub transmission lever 45, and a PTO transmission lever 46 are arranged between the control seat 8 and the left side column 42, the parking brake lever 43 being provided for executing an operation for maintaining both the right and left rear wheels 4 in a braking state, the super low speed lever 44 forcibly and widely reducing the traveling speed (the vehicle speed) of the tractor 1, the sub transmission lever 45 being provided for switching an output range of the traveling sub transmission gear mechanism within the transmission case 17, and the PTO transmission lever 46 being provided for switching a driving speed of the PTO shaft 25. A differential lock pedal 47 is arranged below the control seat 8, the differential lock pedal 47 being provided for turning on and off differential drive of both the right and left rear wheels 4. A reverse PTO lever 48 is arranged in a left side at the rear of the control seat 8, the reverse PTO lever 48 executing an operation for reverse driving the PTO shaft 25.

An arm rest 49 is provided between the control seat 8 and the left side column 42, the arm rest 49 being provided for mounting an arm or an elbow of the operator seating on the control seat 8. The arm rest 49 is constructed separately from the control seat 8, and is also provided with a main transmission lever 50 which increases and decreases the traveling speed of the tractor 1, and a dial type working portion position dial 51 (an elevating dial) which manually changes and adjusts a height position of the working machine such as the rotary tiller. The arm rest 49 is structured to be rotatably flipped up in a plurality of stages around a rear end lower portion as a supporting point.

A throttle lever 52, a PTO clutch switch 53, and a plurality of hydraulic operation levers 54 (SCV levers) are arranged in order from front to back in the left side column 42, the throttle lever 52 setting and maintaining the rotating speed of the engine 5, the PTO clutch switch 53 connecting and disconnecting the power transmission from the PTO shaft 25 to the working machine such as the rotary tiller, and the hydraulic operation levers 54 being provided for switching hydraulic externally take-out valves (sub control valves, not shown) arranged in an upper surface side of the transmission case 17. Here, the hydraulic externally take-out valve is provided for supplying and controlling the operating oil to the other working machine such as a front loader which is retrofitted to the tractor 1. In the embodiment, four hydraulic operation levers 54 are arranged in conformity to the number (four) of the hydraulic externally take-out valves.

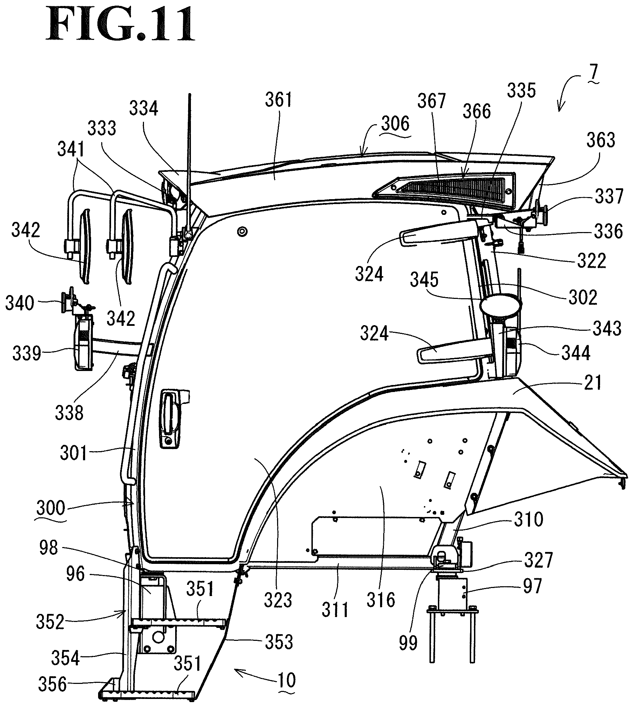

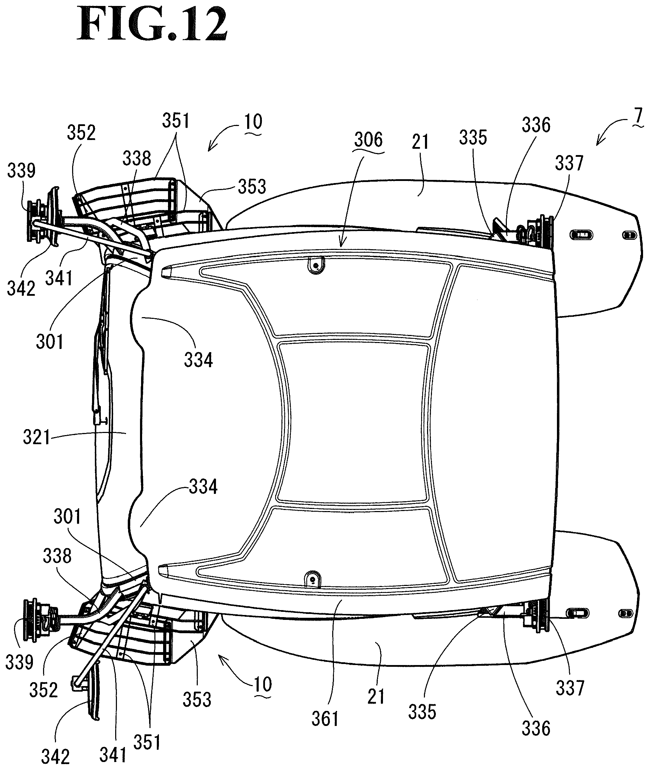

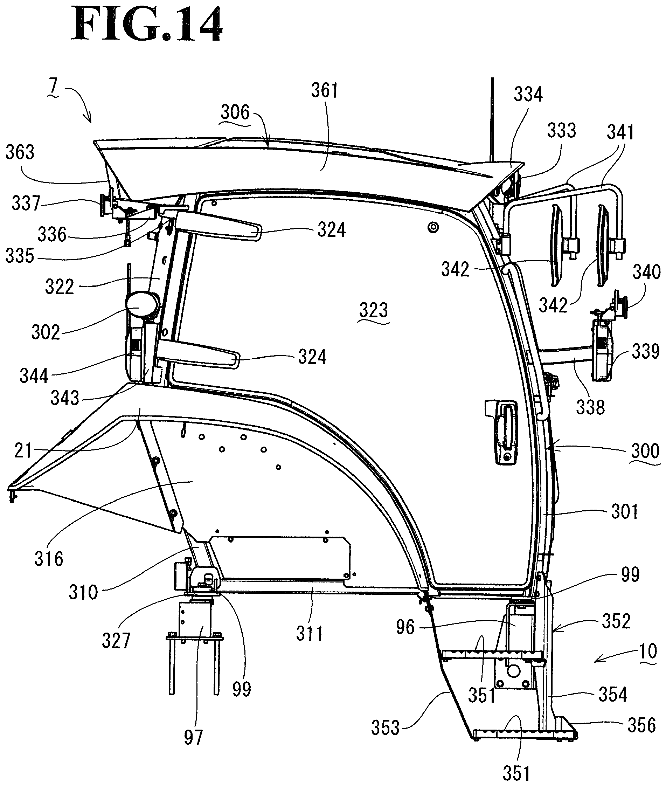

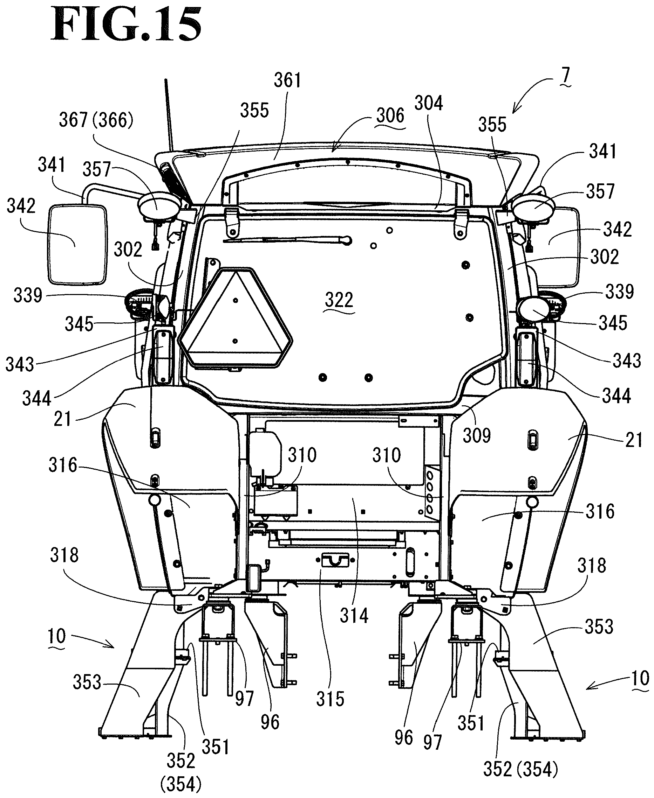

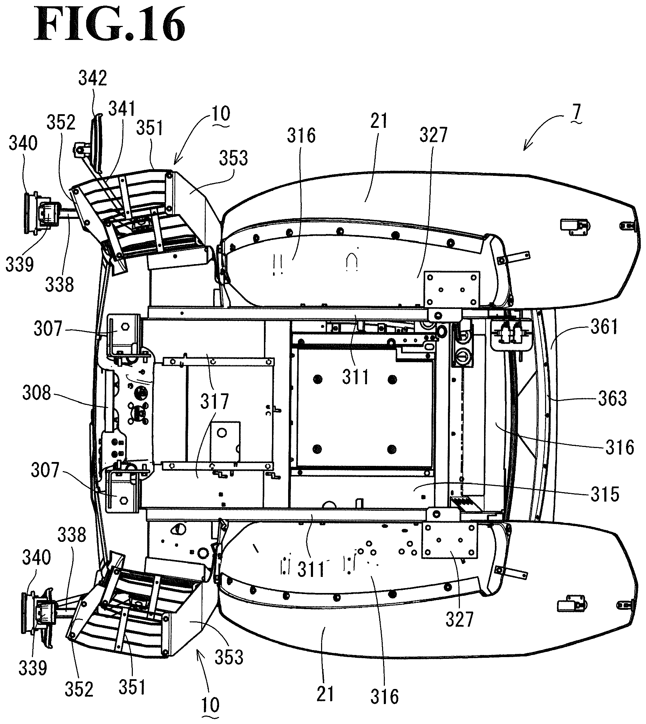

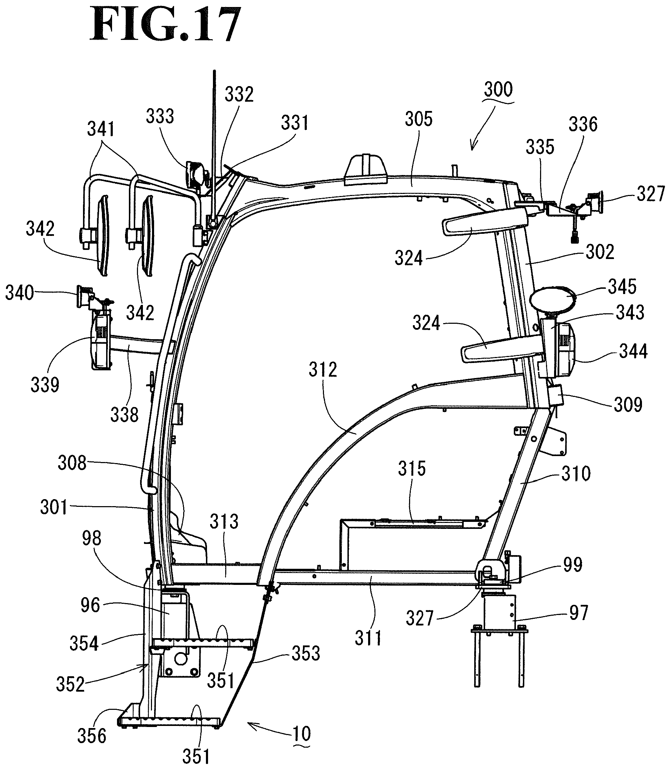

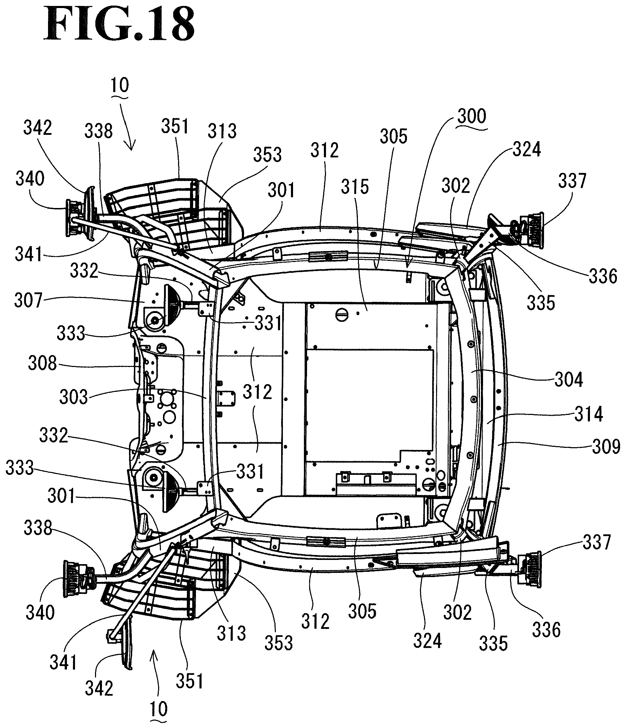

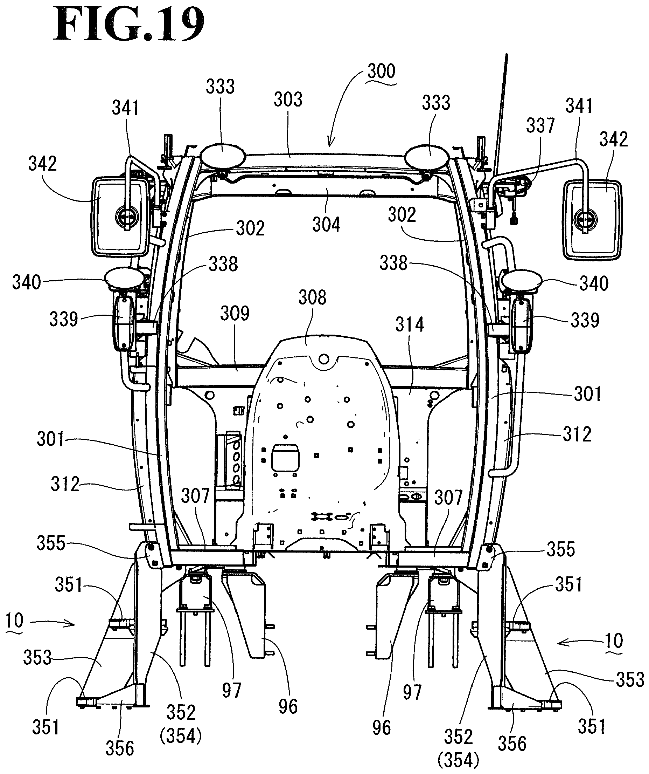

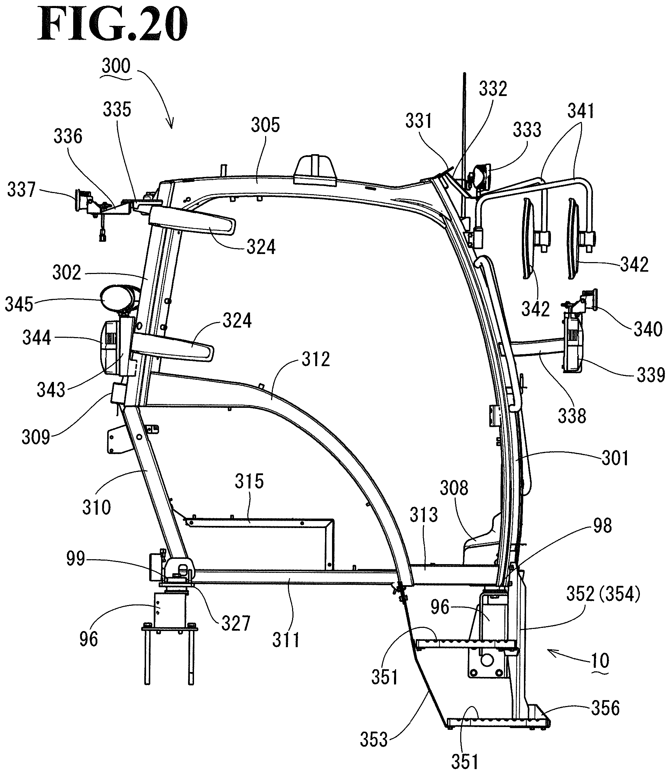

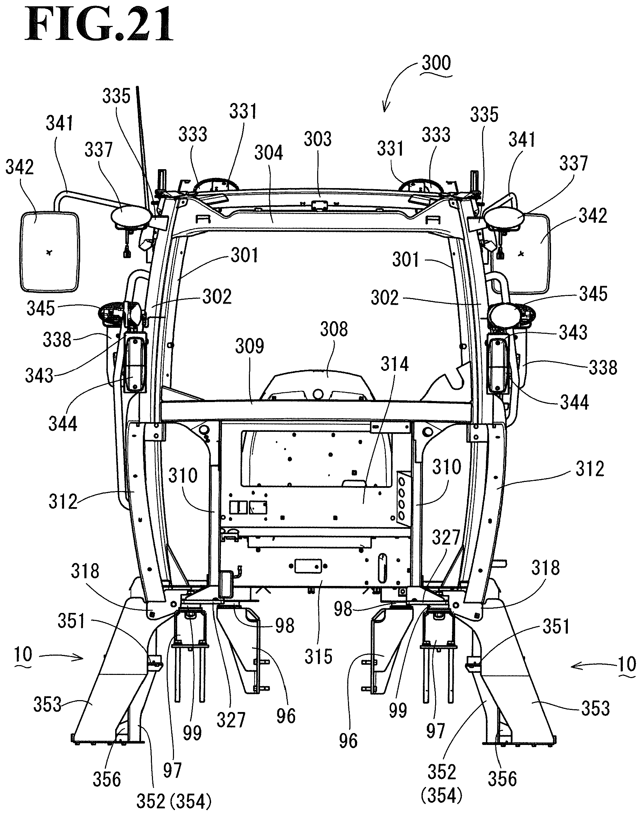

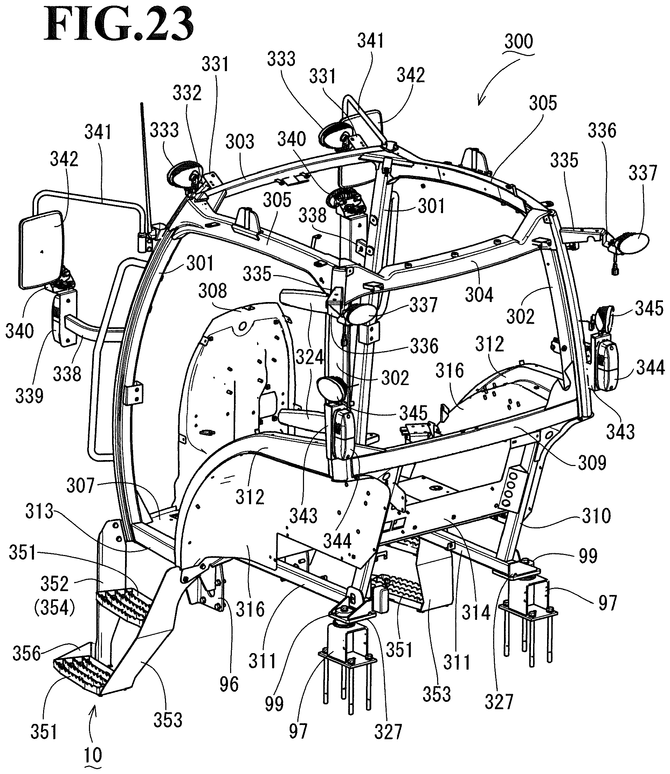

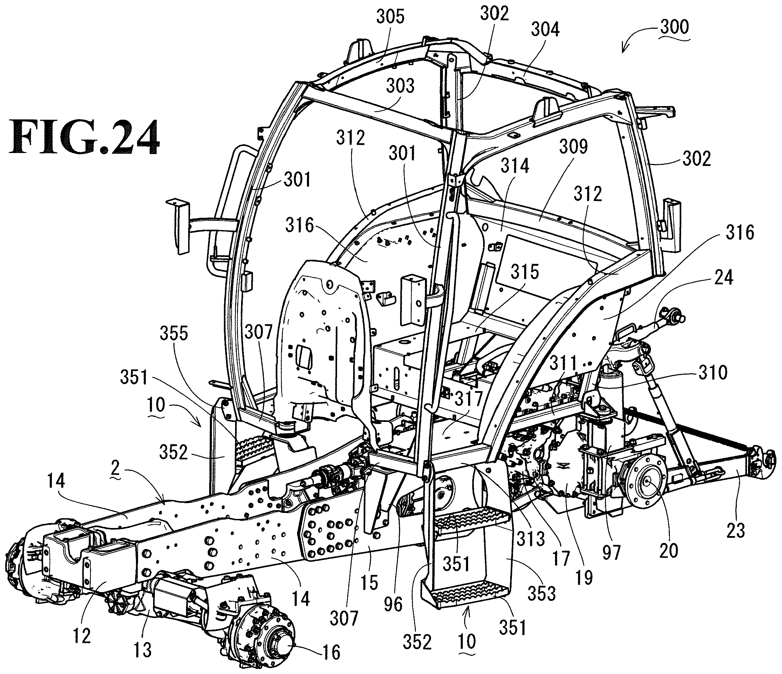

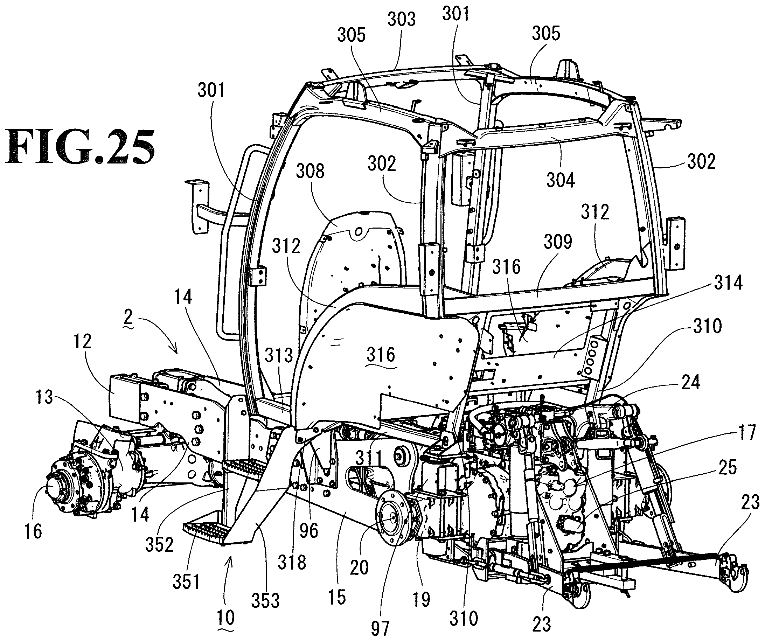

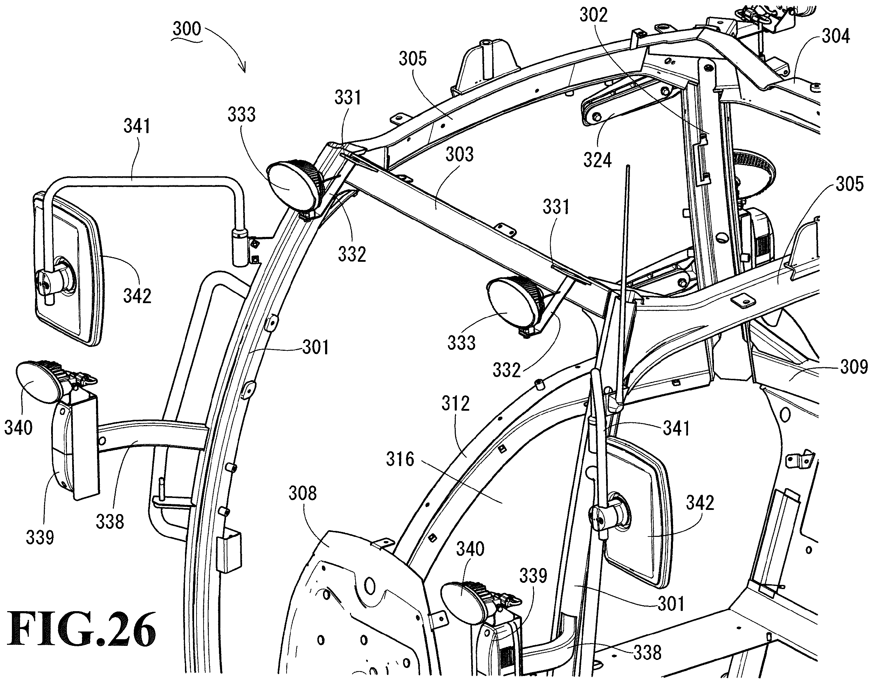

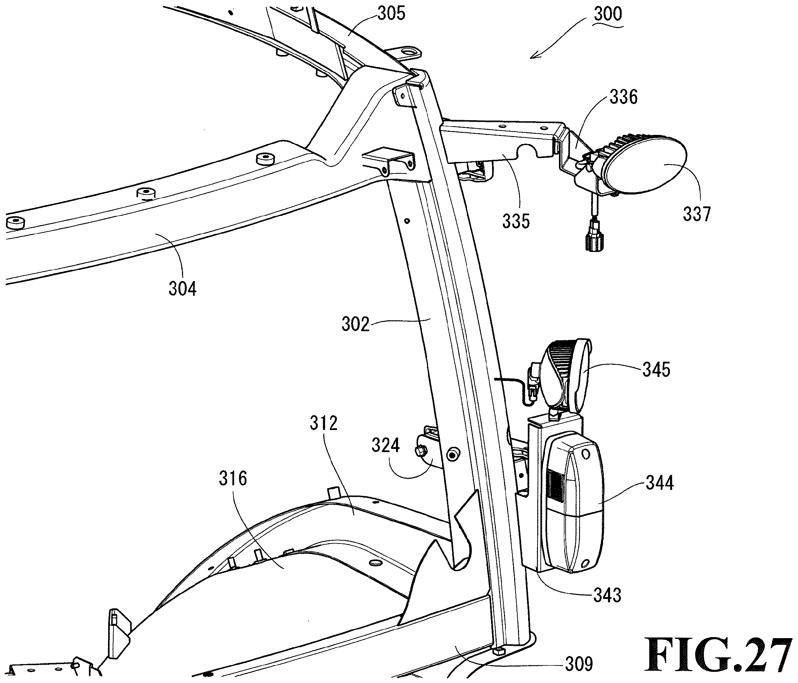

Next, a description will be given of a detailed structure of the cabin 7 with reference to Figs. 11 to 27. The cabin 7 covering the control seat 8 on the travel machine body 2 is provided with a cabin frame 300 which constructs a framework. The cabin frame 300 is formed into an approximately box frame shape having a pair of right and left front column supports 301 which are positioned at the front side of the control seat 8, a pair of right and left rear column supports 302 which are positioned at the rear side of the control seat 8, a front beam member 303 which couples between upper end portions of the front column supports 301, a rear beam member 304 which couples between upper end portions of the rear column supports 302, and right and left side beam members 305 which couple between the upper end portions of the front column supports 301 and the rear column supports 302 lined up back and forth. A roof body 306 is detachably mounted onto an upper end side of the cabin frame 300, that is, a rectangular frame which is constructed by the front beam member 303, the rear beam member 304, and the right and left side beam members 305.

Right and left outer end sides of a front lower plate board 307 extending laterally inward are coupled to lower end sides of the respective front column supports 301. A vertically long board support plate 308 fixedly supporting the dash board 33 is coupled to right and left inner end sides of both the right and left front lower plate boards 307, and the board support plate 308 is provided in a rising manner between both the right and left front column supports 301. Meanwhile, a rear intermediate beam member 309 extending in parallel to the rear beam member 304 is coupled between lower end portions of both the right and left rear column supports 302. Upper end sides of a pair of right and left rear lower frames 310 extending downward are coupled to the rear intermediate beam member 309. Respective end portions in a longitudinal direction of a bottom frame 311 extending back and forth are coupled to the front lower plate boards 307 and a lower end side of the rear lower frame 310 lined up back and forth.

An upper portion side at a rear end of a fender frame 312 is coupled to a lower end side of each of the rear column supports 302, the fender frame 312 being curved so as to bulge forward and upward in a side view along a shape of the rear fender 21. A lower portion side at a front end of each of the fender frames 312 is coupled to a rear end side of a side frame 313 which protrudes rearward from a lower portion of the corresponding front column support 301. The right and left outer end sides of the front lower plate board 307 are coupled to the respective side frames 313. The right and left rear fenders 21 are attached to right and left outer surface sides of the fender frames 312 and right and left outer surface sides of the corresponding rear lower frames 310.

A rear cover plate 314 is attached to the rear intermediate beam member 309 and the right and left rear lower frames 310, the rear cover plate 314 covering an area which is surrounded by the rear intermediate beam member 309 and the right and left rear lower frames 310. A seat support plate 315 having an L-shaped side elevational form is attached to a lower end side of the rear cover plate 314 and the right and left bottom frames 311. The control seat 8 is arranged on the seat support plate 315. A fender inner plate 316 is attached to the right and left fender frames 312, the rear lower frame 310, and the bottom frame 311, the fender inner plate 316 having a bulging form along an inner surface side at the front portion of the rear wheels 4. The side column 42 is arranged on the right and left fender inner plates 316. A floor panel support plate 317 is attached to the right and left front lower plate boards 307, the front portion side of the bottom frame 311, the side frame 313, and the front end side of the seat support plate 315 to support floor panel 40. The floor panel 40 is arranged on the right and left floor panel support plates 317. The lower portion sides at the front end of the right and left fender frames 312 are coupled to the front and rear intermediate portions of the corresponding bottom frames 311 by an auxiliary frame 318 which is laterally long.

A front glass 321 is arranged in a front surface side of the cabin frame 300, that is, an area which is surrounded by the right and left front column supports 301, the front beam member 303, and the right and left front lower plate boards 307. A rear glass 322 is arranged in a rear surface side of the cabin frame 300, that is, an area which is surrounded by the right and left rear column supports 302, the rear beam member 304, and the rear intermediate beam member 309. A side door 323 constructed by a transparent glass is arranged in right and left side surface sides of the cabin frame 300, that is, an area which is surrounded by the front column 301 and the rear column support 302 lined up back and forth, the side beam member 305, the fender frame 312, and the side frame 313. The respective side doors 323 are attached to the corresponding rear column supports 302 via a pair of upper and lower hinges 324 so as to be freely opened and closed.

As is apparent from the arrangement structure of the front glass 321, the rear glass 322, and the right and left side doors 323, each of the column supports 301 and 302 and each of the beam members 303, 304, and 305 are positioned in a side edge portion of the cabin 7 (the cabin frame 300). Therefore, a wide window can be secured in the front and rear surfaces and the right and left side surfaces of the cabin frame 300. In the embodiment, the front glass 321, the rear glass 322, and the right and left side doors 323 (made of the transparent glass) are arranged in the front and rear surfaces and the right and left side surfaces of the cabin frame 300. As a result, it is possible to secure field of view of the operator in the back and forth direction and the right and left direction and secure the rigidity of the cabin frame 300 at the same time.

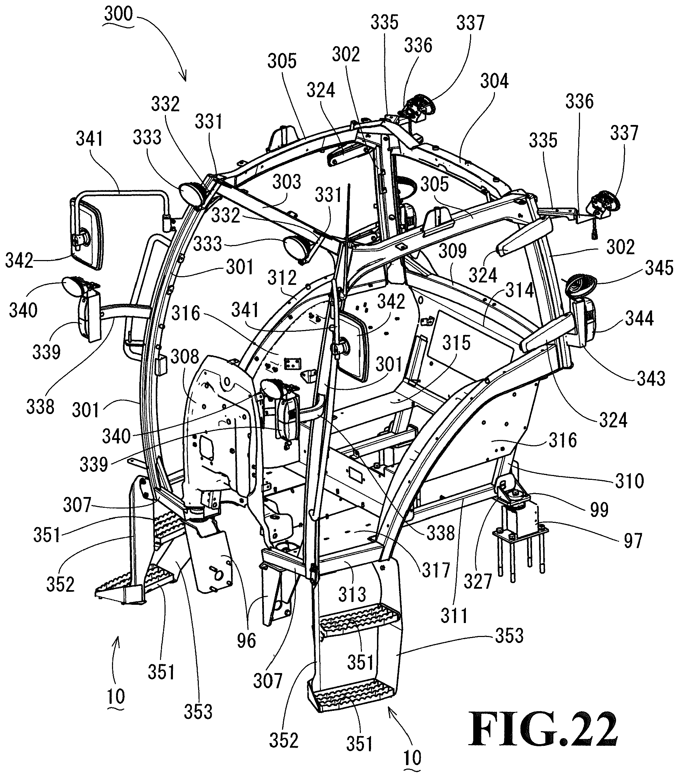

As shown in Figs. 22 to 25, front portion sides of the right and left front lower plate boards 307 are coupled to front portion support tables 96 which are attached to the right and left machine body frames 15, via front vibration absorption rubber bodies 98 which serve as vibration absorption members. Further, base brackets 327 protruding laterally outward are provided in coupling portions (abutting portions) between the right and left rear lower frames 310 and the bottom frames 311. The right and left base brackets 327 are coupled to rear portion support tables 97 which are attached onto the right and left rear axle cases 19, via rear vibration absorption rubber bodies 99 which serve as the vibration absorption members. Therefore, the travel machine body 2 supports the cabin 7 in a vibration absorbing manner via a plurality of vibration absorption rubber bodies 98 and 99.

As shown in Figs. 11 to 27, the cabin frame 300 is provided with various support stays 331, 335, 338, and 343 for attaching a lamp fitting member. More specifically, a pair of right and left front upper stage support stays 331 is fixed by welding to a longitudinally intermediate portion of the front beam member 303. Each of the front upper stage support stays 331 is formed into a thin plate which protrudes diagonally upward in a forward side. A front upper stage working lamp 333 which is an example of the lamp fitting member is attached to each of the front upper stage support stays 331 via a front attaching piece 332 protruding downward in a front side. The right and left front upper stage working lamps 333 are structured to light up the forward direction of the tractor 1. The right and left front upper stage working lamp 333 are positioned to lap over the front beam member 303 in a front view so as not to hinder the forward field of view of the operator. In a front portion side of the roof body 306, there is formed a concave portion 334 (which may be also called as a bulging portion) which is depressed upward so that each of the front upper stage working lamps 333 is fitted thereto. When the roof body 306 is attached to an upper end side of the cabin frame 301, the front upper stage working lamp 333 is accommodated in each of the concave portions 334 in the front portion side. Therefore, the roof body 306 and each of the front upper stage working lamps 333 do not interfere.

Meanwhile, a base end side of the rear upper stage support stay 335 is fixed by welding to an upper end side of the right and left rear column supports 302 so as not to hinder the forward field of view of the operator, the rear upper stage support stay 335 protruding rearward in a laterally outward direction so as to get away from both of the rear beam member 304 and the right and left side beam members 305 in a plan view. A rear upper stage working lamp 337 which is an example of the lamp fitting member is attached to a leading end side of each of the rear upper stage support stays 335, via a rear attaching piece 336 which extends rearward. The right and left rear upper stage working lamps 337 are structured to light up a rear side (the working machine or the like) of the tractor 1. In the embodiment, since the rear upper stage support stay 335 is provided in the upper end side of each of the rear column supports 302 in place of the rear beam member 304, an arrangement space in the rear portion side of the roof body 306 (an arrangement space for a rear portion cover 363 accommodating an air conditioning machine 364) is secured between the right and left rear upper stage support stays 335 while well securing a rear field of view of the operator.

A base end side of a front intermediate stage support stay 338 is fixed by welding to upper and lower intermediate portion of each of the right and left front column supports 301. A front combination lamp 339 and a front intermediate stage working lamp 340 which are examples of the lamp fitting member are attached to leading end side of each of the front intermediate stage support stays 338. Each of the front intermediate stage support stays 338 protrudes forward in a laterally outward direction which gets away from both of the front beam member 303 and the right and left side beam members 305 in a plan view, so as to prevent the front combination lamp 339 and the front intermediate stage working lamp 340 from hindering the forward field of view of the operator, and is curved so as to extend forward from the longitudinally intermediate portion. The front combination lamp 339 is structured to express a vehicle width and rightward and leftward turning intention of the tractor 1 to the vehicle and the person existing in front of the tractor 1, and the front combination lamp 339 according to the embodiment is constructed by a winker lamp and front position lights. The right and left front intermediate stage working lamps 340 are structured to light up the forward direction of the tractor 1. In the embodiment, a vertically long attaching bracket 341 is provided in a leading end side of each of the front intermediate stage support stays 338, and the front combination lamp 339 is attached to a front surface side of the attaching bracket 341. The front intermediate stage working lamp 340 is attached to an upper end side of the attaching bracket 341. Side mirrors 342 are attached to the above of the front intermediate stage support stays in the right and left front column supports 301 via mirror stays 341. The mirror stays 341 extend forward in the laterally outward direction which gets away from both of the front beam member 303 and the right and left side beam members 305 in a plan view so as not to hinder the forward field of view of the operator.

A front surface side of the vertically long rear lower stage support stay 343 is fixed by welding to a lower portion of the right and left rear column supports 302. A rear combination lamp 344 and a rear lower stage working lamp 345 which are examples of the lamp fitting member are attached to a rear surface side of each of the rear lower stage support stays 343. Each of the rear lower stage support stays 343 is protruded laterally outward from the right and left rear column supports 302 in a back view so as to prevent the rear combination lamp 344 and the rear lower stage working lamp 345 from hindering the rearward field of view of the operator. The rear combination lamp 344 is structured to express decelerating, stopping, rearward moving, and rightward and leftward turning intention of the tractor 1 to the vehicle and the person existing at the rear of the tractor 1, and the rear combination lamp 344 according to the embodiment is constructed by a rear lamp, a brake light, a backup light, and a winker lamp. The right and left rear lower stage working lamps 345 are structured to light up the right and left directions of the tractor 1. In the embodiment, the rear combination lamp 344 is attached to a front surface side of each of the rear lower stage support stays 343. The rear lower stage working lamp 345 is attached to an upper end side of the rear lower stage support stay 343. The front combination lamp 339 and the rear combination lamp are set approximately at the same level of vertical height positions.

Although details are not illustrated, in the embodiment, the cabin frame 300 is formed into a hollow shape, and an internal portion of the hollow shape is constructed as a wiring passage for inserting cables. Further, the cables are taken out of a notched hole (not shown) which is formed in each of the column supports 301 and 302, the beam members 303 and 304, and the support stay, and the cables are connected to each of the lamp fitting members 333, 337, 339, 340, 344, and 345.

As is apparent from the above description and Figs. 11 to 27, in the work vehicle 1 provided with the cabin 7 which covers the control seat 8 on the travel machine body 2, the cabin 7 having the cabin frame 300 which constructs the framework, and the roof body 306 which is arranged in the upper end side of the cabin frame 300, the cabin frame 300 is provided with the support stays 331, 335, 338, and 343 which attach the lamp fitting members 333, 337, 339, 340, 344, and 345. Therefore, the lamp fitting members 333, 337, 339, 340, 344, and 345 can be directly attached to the cabin frame 300. As a result, a cost reduction can be achieved while contributing to an improvement of an assembling workability in a manufacturing line.

Further, the cabin frame 300 is provided with a pair of right and left front column supports 301, a pair of right and left rear column supports 302, the front beam member 303 coupling between the upper end portions of the front column supports 301, the rear beam member 304 coupling between the upper end portions of the rear column supports 302, and the side beam members 305 coupling between the upper end portions of the front column supports 301 and the rear column supports 302 lined up back and forth, the front combination lamp 339 and the front intermediate stage working lamp 340 which correspond to the lamp fitting member are attached to the support stay 338 which is provided in the vertically intermediate portion of each of the front column supports 301, and the rear combination lamp 344 and the rear lower stage working lamp 345 which correspond to the lamp fitting member are attached to the support stay 343 which is provided in the lower portion of each of the rear column supports 302. Therefore, the front combination lamp 339 and the front intermediate stage working lamp 340 can be collectively attached to the support stay 338 in the side of each of the front column supports 301, and the rear combination lamp 344 and the rear lower stage working lamp 345 can be collectively attached to the support stay 343 in the side of each of the rear column supports 302. More specifically, each of the support stays 338 and 343 can be used as the support member for the plurality of lamp fitting members 339, 340, 344, and 345, thereby contributing to the reduction of the parts number. Further, the cables can be simply wired around the plurality of lamp fitting members 339, 340, 344, and 345. It is easy to secure the field of view in the back and forth direction and the right and left direction from the inside of the cabin 7.

As is apparent from the above description and Figs. 11 to 27, in the work vehicle 1 provided with the cabin 7 which covers the control seat 8 on the travel machine body 2, the cabin 7 having the cabin frame 300 which constructs the framework, and the roof body 306 which is arranged in the upper end side of the cabin frame 300, the cabin frame 300 is provided with a pair of right and left front column supports 301, a pair of right and left rear column supports 302, the front beam member 303 which couples between the upper end portions of the front column supports 301, the rear beam member 304 which couples between the upper end portions of the rear column supports 302, and the side beam members 305 which couple between the upper end portions of the front column supports 301 and the rear column supports 302 lined up back and forth, the front upper stage working lamps 333 are respectively attached to a pair of right and left support stays 331 which are provided in the longitudinal intermediate portion of the front beam member 303, and the rear upper stage working lamp 337 is attached to the support stay 335 which is provided in the upper end side of the column support 302. Therefore, the front upper stage working lamp 333 can be directly attached to the front beam member 303, and the rear upper stage working lamp 337 can be directly attached to the rear beam member 304. As a result, the cost reduction can be achieved, while contributing to the improvement of the assembling workability in the manufacturing line. Further, it is not necessary to attach each of the upper stage working lamps 333 and 337 to the roof body 306 and wire the cable, the assembling work of the roof body 306 in relation to the cabin frame 300 can be simplified. In this regard, it is possible to contribute to the improvement of the assembling workability in the manufacturing line.

Further, since each of the front upper stage working lamps 333 is positioned so as to lap over the front beam member 303 in a front view, it is possible to significantly reduce a risk that each of the front upper stage working lamps 333 hinders the forward field of view of the operator seating on the control seat 8, and it is possible to well secure the forward field of view of the operator.

Next, a description will be given of a detailed structure of the steps 10 which are provided in the right and left lower portions of the cabin 7, with reference to Figs. 11 to 23. As shown in Figs. 11 to 23, the steps 10 which the operator gets on and off are provided in a suspending manner in the right and left lower portion sides of the cabin 7 between the front wheels 3 and the rear wheels 4 lined up back and forth. The step 10 according to the embodiment is provided with a plurality of step board stage portions 351 (two stages in the embodiment), and front and rear side plate portions 352 and 353 which are coupled to the step board stage portions 351. A plurality of step board stage portions 351 are displaced each other in the back and forth direction so as to get away from the rear wheels 4 toward the lower stage. In the embodiment, the step board stage portion 351 in the lower stage side is at a position which is displaced forward in relation to the step board stage portion 351 in the upper stage side.

In this case, the front side board portion 352 is formed into an approximately L-shaped form in a front view. An upper end side of a vertically long portion 354 in the front side board portion 352 is fastened by bolts to a bracket piece 355 which is fixed by welding to a lower end side of each of the front column supports 301. A front end side of the step board stage portion 351 in the upper stage side is fixed to a vertically intermediate position of the vertically long portion 354 in the front side board portion 352. A front end side of the step board stage portion 351 in the lower stage side is fixed to a lower end horizontal portion 356 of the front side board portion 352. The lower end horizontal portion 356 of the front side board portion 352 protrudes forward than the vertically long portion.

An upper end side of the rear side board portion 353 is fastened by bolts to the auxiliary frame 318 which connects the right and left fender frames 312 and the bottom frame 311. A rear end side of the step board stage portion 351 in the upper stage side is fixed to a vertically intermediate portion of the rear side board portion 353. A rear end side of the step board stage portion 351 in the lower stage side is fixed to a lower end side of the rear side board portion 353. The rear side board portion 353 is inclined downward diagonally in the forward direction and is bent further forward near the vertically intermediate portion. According to the structure mentioned above, a moving direction of the operator getting on the cabin 7 can be easily directed to a diagonally upward direction in the backward direction heading for the control seat 8 (a flow line of the operator can be directed to the control seat 8 on the basis of the displaced arrangement of the step board stage portions 351). Therefore, it is possible to significantly improve a performance for getting on and off the cabin 7.

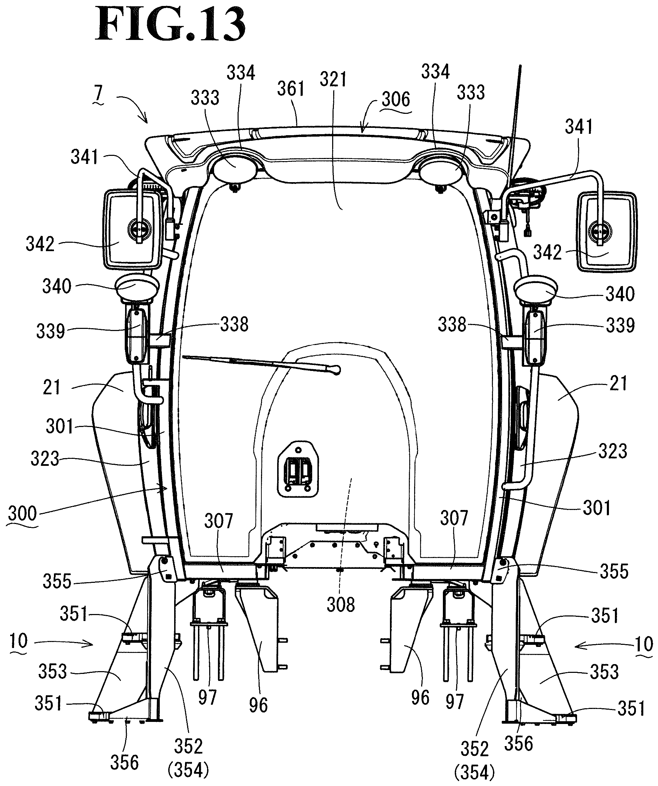

As shown in Figs. 13, 19, 22, and 23, a width in a lateral direction of the rear side board portion 353 is set to be wider than a width in a lateral direction of the front side board portion 352 (the vertically long portion 354). According to the structure mentioned above, the existence of the front side board portion 352 (the vertically long portion 354) does not form an obstacle when the operator steps foot on each of the step board stage portions 351, thereby contributing to the improvement of the performance for getting on and off the cabin 7 in this regard. Further, since the rear side board portion 353 is wide, it is possible to effectively suppress mud spatter in the rear wheels 4 on the basis of the existence of the rear side board portion 353.

As is apparent from the above description and Fig. 11 to 23, in the work vehicle 1 provided with the travel machine body 2 which mounts the engine 5, a pair of right and left front wheels 3 and a pair of right and left rear wheels 4 which support the travel machine body 2, the cabin 7 which covers the control seat 8 on the travel machine body 2, and the step 10 for getting on and off the cabin 7, the steps 10 are provided in a suspending manner in the sides of the right and left lower portions of the cabin 7 between the front wheels 3 and the rear wheels 4 lined up back and forth, the step 10 is provided with a plurality of step board stage portions 351 and the front and rear side board portions 352 and 353 which are coupled to the step board stage portions 351, and a plurality of step board stage portions 351 are displaced each other in the back and forth direction so as to get away from the rear wheels 4 toward the lower stage. Each of the step board stage portions 351 is positioned along the flow line of the operator heading for the internal and external sides of the cabin 7, and it is possible to significantly improve the performance for getting on and off the cabin 7.

Further, since the width in the lateral direction of the rear side board portion 353 is set to be wider than the width in the lateral direction of the front side board portion 352 (the vertically long portion 354), the existence of the front side board portion 352 does not form an obstacle when the operator steps foot on each of the step board stage portions 351, thereby contributing to the improvement of the performance for getting on and off the cabin 7 in this regard. Further, since the rear side board portion 353 is wide, it is possible to effectively suppress the mud spatter of the rear wheels 4 on the basis of the existence of the rear side board portion 353.

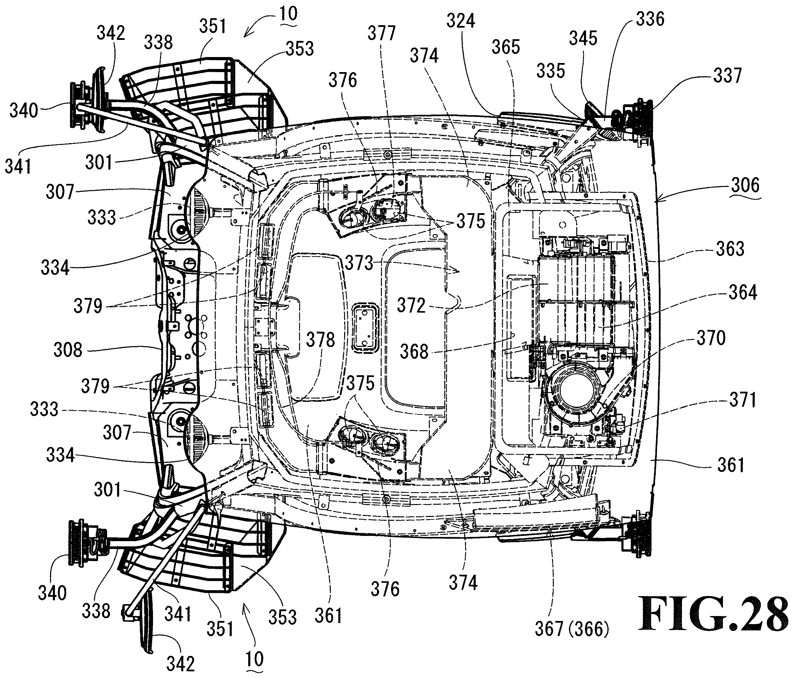

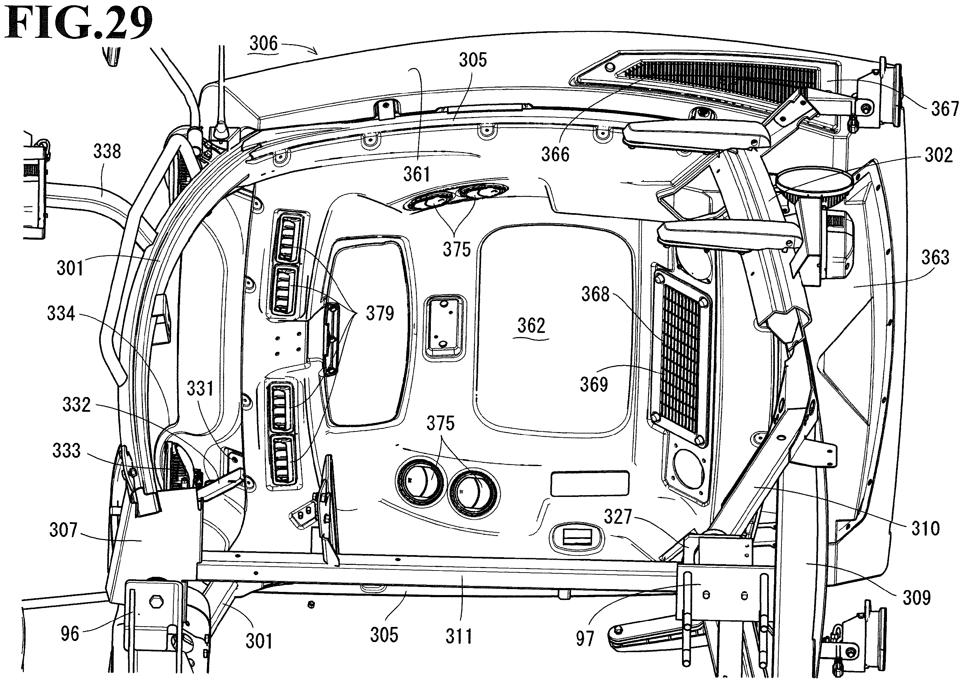

Next, a description will be given of an air conditioning structure inside and outside the roof body 306 with reference to Figs. 1, 2, 11, 14, 28, and 29. The roof body 306 attached to the upper end side of the cabin frame 301 is provided with an outer roof 361 which is an exterior package, an inner roof 362 which constructs a ceiling of the cabin 7, and a rear portion cover 363 which protrudes rearward than the rear beam member 304. An internal portion of the roof body 306 is formed into a hollow shape by covering the inner roof 362 and the rear portion cover 363 with the outer roof 361 from the above. Therefore, a rear portion side of the outer roof 361 also extends rearward from the rear beam member 304. A concave portion 334 (a bulging portion) to which each of the front upper stage working lamp 333 is fitted is formed in the front portion side of the outer roof 361.

The internal portion of the roof body 306 is comparted into two front and rear chambers by the inner roof 362 and the rear portion cover 363. A space in the inner roof 362 side corresponds to the front chamber, and a space in the rear portion cover 363 side corresponds to the rear chamber. The air conditioning machine 364 controlling air conditioning within the cabin 7 is accommodated in the rear chamber side (the rear portion cover 363 side) in the internal portion of the roof body 306. The air conditioning machine 364 is structured to regulate the air conditioning (room temperature) within the cabin 7 by means of heating utilizing a cooling water of the engine 5, and cooling utilizing a compressor, a condenser, and an evaporator which are driven by the engine. A total height of the cabin 7 is prevented from being higher than necessary by arranging the air conditioning machine 364 in the side of the rear portion cover 363 which protrudes rearward than the rear beam member 304. Particularly, in the embodiment, since the rear upper stage support stay 335 is provided in the upper end side of each of the rear column supports 302 in place of the rear beam member 304, the arrangement space in the rear portion side of the roof body 306 (the arrangement space for the rear portion cover 363 accommodating the air conditioning machine 364) is secured between the right and left rear upper stage support stays 335 while well securing the rear field of view of the operator.

The rear portion cover 363 is coupled to the rear beam member 304 of the cabin frame 300. Therefore, the rear portion cover 363 and the air conditioning machine 364 are supported by the rear beam member 304 of the cabin frame 300. A seal member 365 is attached to a peripheral edge portion of the rear portion cover 363. In a state in which the outer roof 361 is put on and attached onto the inner roof 362 and the rear portion cover 363, the seal member 365 is closely attached to the inner surface side of the outer roof 361 and the rear chamber side (the rear portion cover 363 side) in the internal portion of the roof body 306 comes to a sealed state.

Right and left side portions of the outer roof 361 are inclined so as to be cut off diagonally downward heading for right and left inner sides. An outside air intake port 366 communicating the rear chamber side (the rear portion cover 363 side) in the internal portion of the roof body 306 with the external portion is formed in a side portion in an opposite side to a tail pipe 229 (refer to Figs. 1 to 10) which discharges exhaust gas of the engine 5 to the external portion in the right and left side portions of the outer roof 361. In this case, the tail pipe 229 is provided in a rising manner so as to extend upward from a downward side in the forward right side of the cabin 7 (extends along the right front column support 301). On the contrary, the outside air intake port 366 is formed in a rear portion side in a left side portion of the outer roof 361 (at a position corresponding to the rear portion cover 363). The outside air intake port 366 is faced to the air conditioning machine 364 within the rear portion cover 363 from the left side via a communication port (not shown) which is formed in a left side wall portion of the rear portion cover 363. A grid-like ventilation frame body 367 is installed to the outside air intake port 366. Although a detailed illustration will be omitted, a dust collecting filter is attached to a communication port which is formed in a left wall portion of the rear portion cover 363. Meanwhile, an inside air intake port 368 communicating the inside of the rear portion cover 363 and the inside of the cabin 7 is formed in a rear portion side of the inner roof 362 which faces to a rear head portion of the operator seating on the control seat 8. A grid-like ventilation frame body 369 is installed to the inside air intake port 368.

An inside and outside air switching shutter plate 370 is arranged within the rear portion cover 363, the inside and outside air switching shutter plate 370 opening and closing a communication port which is formed in a left wall portion of the rear portion cover 363. The inside and outside air switching shutter plate 370 is structured to rotationally open and close by driving an actuator 371. The communication port of the rear portion cover 363 is opened by moving the inside and outside air switching shutter plate 370 to open, and the outside air is conducted into the rear portion cover 363 from the outside air intake port 366 via the communication port by driving the air conditioning machine 364 within the rear portion cover 363. The communication port of the rear portion cover 363 is closed and the outside air does not enter from the outside air intake port 366 by moving the inside and outside air switching shutter plate 370 to close, and the air within the cabin 7 is guided into the rear portion cover 363 from the inside air intake port 368 by driving the air conditioning machine 364. In the embodiment, it is possible to regulate a rate between the outside air conducted to the air conditioning machine 364 within the rear portion cover 363 and the inside air on the basis of an opening degree (an opening and closing degree) of the inside and outside air switching shutter plate 370.

An upstream side of an air conditioning duct 373 is connected to a regulated air discharge port 372 which is formed in a front surface side of the air conditioning machine 363, the air conditioning duct 372 guiding the regulated air from the rear chamber side (the rear portion cover 363 side) to the front chamber side (the inner roof 362 side) and formed into a bifurcated shape in a plan view. The upstream side of the air conditioning duct 373 is positioned above the inside air intake port 368, and branches into right and left like the bifurcated shape after passing through the front surface side of the rear portion cover 363 and the rear surface side of the inner roof 362. The bifurcated duct portion 374 of the air conditioning duct 373 extends like a rectangular shape in a plan view along a rectangular frame which is constructed by the front beam member 303, the rear beam member 304, and the right and left side beam members 305. A regulating shutter plate 376 is arranged in an intermediate portion of each of the duct portions 374 in the air conditioning duct 373, the regulating shutter plate 376 regulating a communication state between cooling and heating blowout ports 375 provided in both right and left side portions of the inner roof 362 and the duct portion 374. The right and left regulating shutter plates 376 are structured to be rotated in an interlocking manner by an actuator 377 and a push-pull wire 378. A downstream side of each of the duct portions 374 of the air conditioning duct 373 is communicated with a defogging blowout port 379 which is provided in the front portion of the inner roof 362. Each of the blowout ports 375 and 379 is provided with fins (not shown) which change and regulate an air volume and a wind direction of the regulated air from the air conditioning machine 364.

In the case that the flow to the downstream side of each of the duct portions 374 (the flow to each of the defogging blowout ports 379) is closed by both the right and left regulating shutter plates 376, the regulated air from the air conditioning machine 364 blows out into the cabin 7 only from the right and left cooling and heating blowout ports 375. In the case that the flow to the right and left cooling and heating blowout ports 375 is closed by both the right and left regulating shutter plates 376, the regulated air from the air conditioning machine 364 blows out into the cabin 7 only from the right and left defogging blowout ports 379. It is possible to regulate the air volume of the regulated air from the cooling and heating blowout port 375 and the air volume of the regulated air from the defogging blowout port 379 in correspondence to an angle of turning motion of both the right and left regulating shutter plates 376.

As is apparent from the above description and Figs. 1,2, 11, 14, 28, and 29, in the work vehicle 1 provided with the cabin 7 which covers the control seat 8 on the travel machine body 2, the cabin 7 having the cabin frame 300 which constructs the framework, and the roof body 306 which is arranged in the upper end side of the cabin frame 300, a tail pipe 135 discharging the exhaust gas of the engine 5 mounted to the travel machine body 2 to the external portion is provided in one of right and left sides of the travel machine body 2, an internal portion of the roof body 306 is comparted into two front and rear chambers, the air conditioning machine 364 is accommodated in the rear chamber 363 side, and the outside air intake port 366 communicating the rear chamber 363 with the external portion is formed in an opposite side to the tail pipe 229 in the right and left side portions of the roof body 306. Therefore, it is possible to significantly prevent a risk that the exhaust gas from the tail pipe 229 is taken into the outside air intake port 366.

Further, the cabin frame 300 is provided with a pair of right and left front column supports 301, a pair of right and left rear column supports 302, the front beam member 303 which couples between the upper end portions of the front column supports 301, the rear beam member 304 which couples between the upper end portions of the rear column supports 302, and the side beam members 305 which couple between the upper end portions of the front column supports 301 and the rear column supports 302 which are lined up back and forth, the rear chamber 363 of the roof body 306 protrudes rearward than the rear beam member 304, the rear chamber 363 is supported by the rear beam member 304, and the rear upper stage working lamp 337 is attached to the support stay 335 which is provided in the upper end side of each of the rear column supports 302. Therefore, the air conditioning machine 364 can be arranged in the inner portion of the roof body 306 without making a whole height of the cabin 7 higher, and it is possible to avoid a problem that the forward field of view of the operator is restricted since the air conditioning machine 364 is accommodated in the front chamber 362 of the roof body 306. Further, the arrangement space in the rear chamber 363 side of the roof body 306 can be formed between the support stays 335 for both the rear upper stage working lamps 337 by attaching the rear upper stage working lamps 337 to the support stays 335 which are provided in the upper end sides of the rear column supports 302, and it is possible to well secure the rearward field of view of the operator.

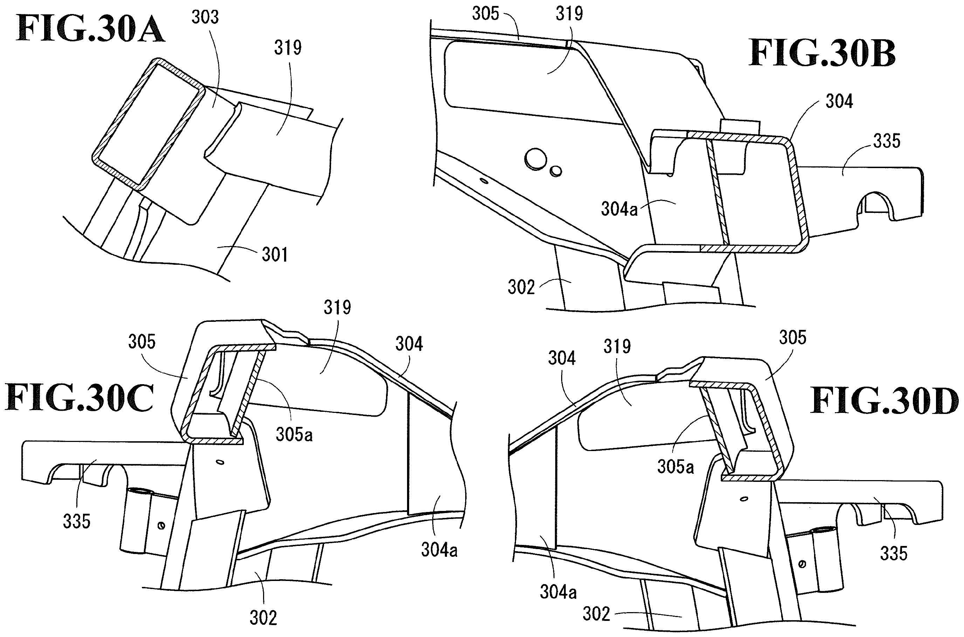

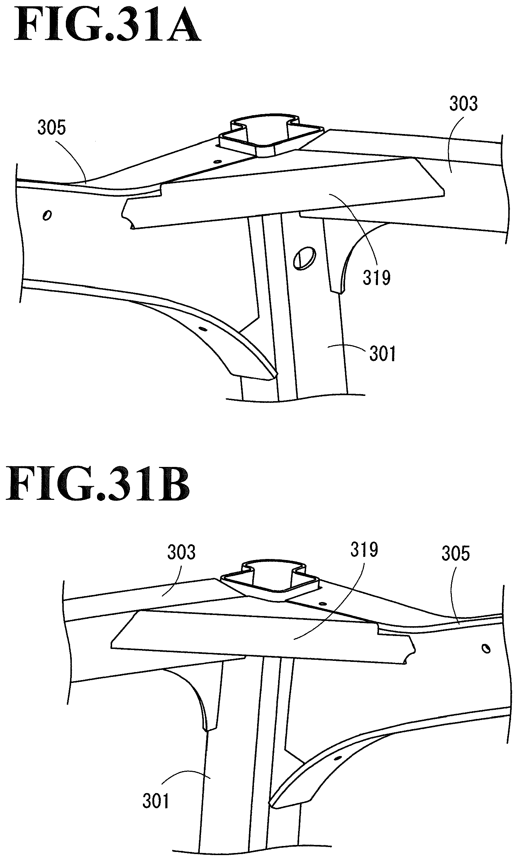

Next, a description will be given of a detailed structure of the beam members 303, 304, and 305 with reference to Figs. 30A to 30D, 31, and 32. As mentioned above, the rectangular frame supporting the roof body 306 is provided with the front beam member 303, the rear beam member 304, and the right and left side beam members 305. The front beam member 303, the rear beam member 304, and the right and left side beam members 305 correspond to the frame members constructing the cabin frame 300. As shown in Fig. 30A, the front beam member 303 is made of a square pipe material having a hollow shape (a rectangular shape in cross section), and extends longer in a lateral direction. As shown in Figs. 31A and 31B, right and left end surfaces of the front beam member 303 are fixed by welding to the upper end side surface of the front column support 301.

The rear beam member 304 and the right and left side beam members 305 are all made of a steel material having a C-shaped form in cross section (a groove shape). The rear beam member 304 extends longer in the lateral direction, and the right and left side beam members 305 extend longer in a back and forth direction. Reinforcing plates 304a and 305a extending along respective longitudinal directions are fitted and fixed by welding to opening portions of the rear beam member 304 and each of the side beam members 305. As a result, at least the longitudinally intermediate portions of the rear beam member 304 and each of the side beam members 305 are formed into a hollow shape (a rectangular shape in cross section) like a square pipe.

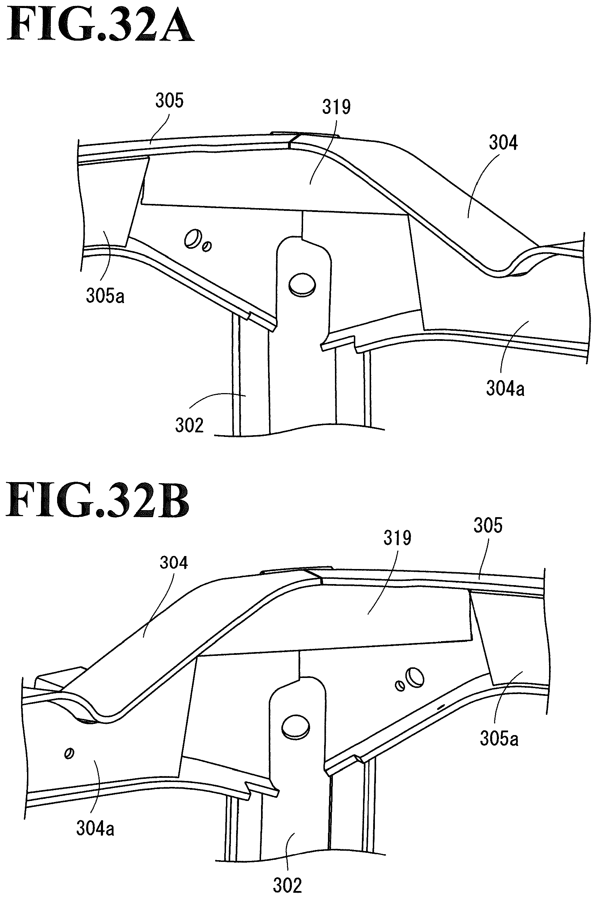

As shown in Figs. 32A and 32B, each of right and left end surfaces of the rear beam member 304 is fixed by welding to the upper end side surface of the rear column support 302. As shown in Figs. 31A and 31B, a front end surface of each of the side beam members 305 is fixed by welding to the upper end side surface of the front column support 301. Therefore, any of the right and left end surfaces of the front beam member 303, and the front end surface of any of the right and left side beam members 305 are confronted with the upper end side of the front column support 301. A brace-shaped reinforcing bracket 319 is fixed by welding to inner sides of the front beam member 303 and the right and left side beam members 305. A coupling strength among the front beam member 303, the right and left side beam members 305, and the front column support 301 is secured by existence of the reinforcing bracket 319.

As shown in Figs. 32A and 32B, a rear end surface of each of the side beam members 305 is fixed by welding to an upper end side surface of the rear column support 302. Therefore, any of right and left end surfaces of the rear beam member 304, and the rear end surface of any of the right and left side beam members 305 are confronted with the upper end side of the rear column support 302. The brace-shaped reinforcing bracket 319 is fixed by welding to inner sides of the rear beam member 304 and the right and left side beam members 305. A coupling strength among the rear beam member 304, the right and left side beam members 305, and the rear column support 302 is secured by existence of the reinforcing bracket 319.

As is apparent from the above description and Figs. 30 to 32, in the work vehicle 1 provided with the cabin 7 which covers the control seat 8 on the travel machine body 2, the cabin 7 having the cabin frame 300 which constructs the framework, at least one frame members 304 and 305 in the cabin frame 300 are formed into the C-shaped form in cross section, and at least the longitudinally intermediate portions of the frame members 304 and 305 are formed into a hollow shape by fixing the reinforcing plates 304a and 305a extending along the longitudinal direction of the frame members 304 and 305 by welding to the opening portions of the frame members 304 and 305. Therefore, it is possible to achieve a cost reduction as well as it is possible to improve the rigidity of the frame members 304 and 305 and further improve the rigidity of the cabin frame 300 without using the conventionally high-cost square pipe material.

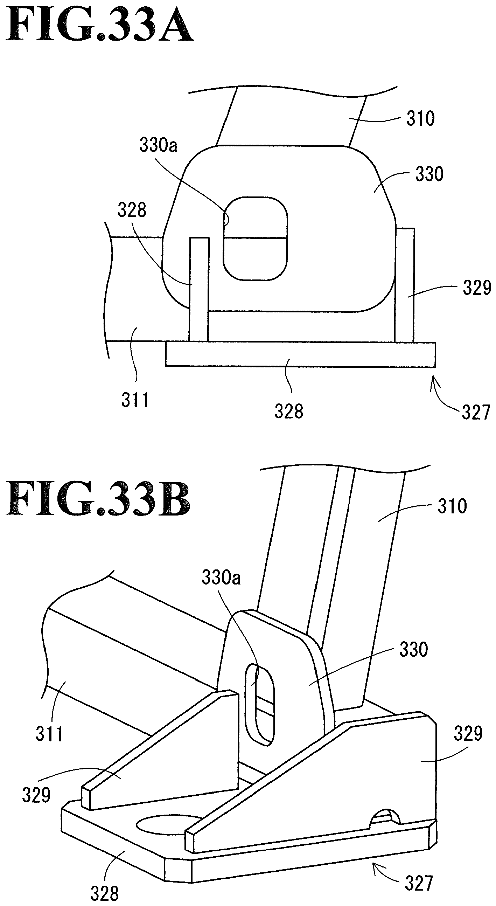

Next, a description will be given of details of the vibration absorption support structure in the lower portion side at the rear of the cabin 7 with reference to Figs. 22 to 25, 33A, and 33B. A base bracket 327 is attached to right and left abutting portions in the lower portion side at the rear of the cabin frame 300 so as to protrude laterally outward. In this case, the base bracket 327 protruding laterally outward is provided in a coupling portion (an abutting portion) between the right and left rear lower frame 310 and the bottom frame 311, as shown in Figs. 22 to 25, 33A, and 33B. Further, the base bracket 327 is coupled to the rear portion support table 97 on the rear axle case 19 which protrudes laterally outward from the transmission case 17 of the travel machine body 2 via the rear vibration absorption rubber body 99 which is the vibration absorption member. In the embodiment, a lower end surface of the rear lower frame 310 is fixed by welding to an upper surface of a rear end of the bottom frame 311. Further, the base bracket 327 is unitized by being previously attached by welding to the rear end side of the bottom frame 311.

The base bracket 327 is provided with a base board plate 328 to which the rear vibration absorption rubber body 99 is attached, and a pair of front and rear prop pieces 329 and a reinforcing plate piece 330 which complements the coupling strength between the base board plate 328 and the bottom frame 311. The base board plate 328 is fixed by welding to the lower surface side at the rear end of the bottom frame 311 so as to protrude laterally outward. A pair of front and rear prop pieces 329 couple an upper surface of the base board plate 328 and a rear end side of the bottom frame 311. The rear prop piece 329 closes an end surface of a rear opening of the bottom frame 311 which is the square pipe material formed into a hollow shape (rectangular shape in cross section). The front prop piece 329 supports the rear end side surface of the bottom frame 311 via the reinforcing plate piece 330. The reinforcing plate piece 330 is arranged so as to lap over the abutting portion between the rear lower frame 310 and the bottom frame 311 from the side direction. An opening hole 330a facing to the abutting portion between the rear lower frame 310 and the bottom frame 311 is formed in the reinforcing plate piece 330. It is possible to weld a portion over which the reinforcing plate piece 330 covers in the abutting portion between the rear lower frame 310 and the bottom frame 311, and the reinforcing plate piece 330, on the basis of existence of the opening hole 330a.

According to the structure mentioned above, the rear lower frame 310 can be fixed by welding to the bottom frame 311 by retrofitting after the base bracket 327 with the reinforcing plate piece 330 is unitized by being previously attached to the bottom frame 311. Further, it is possible to sufficiently secure the weld length of the portion over which the reinforcing plate piece 330 covers in the abutting portion between the bottom frame 311 and the rear lower frame 310, on the basis of the existence of the opening hole 330a, in the case that the rear lower frame 310 is fixed by welding to the bottom frame 311. Therefore, it is possible to achieve the improvement of the bonding strength between the bottom frame 311 and the rear lower frame 310 and further achieve the improvement of the rigidity of the cabin frame 300, as well as the bonding workability of the bottom frame 311 and the rear lower frame 310 can be improved.

Further, since the base bracket 327 is attached to the right and left abutting portions in the lower portion side at the rear of the cabin frame 300 so as to protrude laterally outward, and the base bracket 327 is coupled to the support table 97 on the rear axle case 19 protruding laterally outward from the transmission case 17 of the travel machine body 2, via the vibration absorption member 99, it is possible to support the lower portion side at the rear of the cabin frame 300 from the right and left outer sides, and it is possible to stably couple the lower portion side at the rear of the cabin frame 300 to the travel machine body 2 in a vibration absorbing manner.

The structure of each of the portions in the present invention is not limited to the illustrated embodiment, but can be variously changed within the range which does not deviate from the scope of the prevent invention.

### Reference Signs List

- 1: Tractor
- 2: Travel machine body
- 3: Front wheel
- 4: Rear wheel
- 7: Cabin
- 8: Control seat
- 300: Cabin frame
- 301: Front column support
- 302: Rear column support
- 303: Front beam member
- 304: Rear beam member
- 304a, 305a: Reinforcing plate
- 305: Side beam member
- 327: Base bracket
- 330: Reinforcing plate piece
- 330a: Opening hole

## Claims

1. A work vehicle comprising:
a cabin which covers a control seat on a travel machine body, the cabin having a cabin frame constructing a framework,
wherein at least one frame member of the cabin frame is formed into a C-shaped cross section, and at least a longitudinal intermediate portion of the frame member is formed into a hollow shape by welding and fixing a reinforcing plate extending along a longitudinal direction of the frame member to an opening portion of the frame member.

2. The work vehicle according to claim 1, wherein a base bracket for attaching a vibration absorption member is attached to abutting portions of two frame members which abut on each other in a lower portion side in the cabin frame, and
wherein the base bracket is provided with a reinforcing plate piece which laps over the abutting portions, and an opening hole facing to the abutting portions is formed in the reinforcing plate piece.

3. The work vehicle according to claim 2, wherein the base bracket is attached to the right and left abutting portions in a lower portion side at the rear of the cabin frame so as to protrude laterally outward, and the base bracket is coupled to a support table on a rear axle case which protrudes from a transmission case of the travel machine body laterally outward via the vibration absorption member.

4. The work vehicle according to any one of claims 1 to 3, wherein the cabin frame is provided with a pair of right and left front column supports, a pair of right and left rear column supports, a front beam member which couples between upper end portions of the front column supports, a rear beam member which couples between upper end portions of the rear column supports, and a side beam member which couples between the upper end portions of the front column supports and the rear column supports lined up back and forth, and wherein each of the column supports and each of the beam members are positioned in a side line portion of the cabin.
